(19) Europäisches Patentamt
European Patent Office
Office européen des brevets

(11) **EP 2 171 503 B1**

(12) **FASCICULE DE BREVET EUROPEEN**

(45) Date de publication et mention
de la délivrance du brevet:
**07.08.2013 Bulletin 2013/32**

(21) Numéro de dépôt: **08786218.1**

(22) Date de dépôt: **17.07.2008**

(51) Int Cl.:
**G02B 3/14** *(2006.01)*     **G02B 26/08** *(2006.01)*

(86) Numéro de dépôt international:
**PCT/EP2008/059385**

(87) Numéro de publication internationale:
**WO 2009/010559 (22.01.2009 Gazette 2009/04)**

(54) **DISPOSITIF OPTIQUE A MOYENS D'ACTIONNEMENT D'UNE MEMBRANE DÉFORMABLE COMPACTS**

OPTISCHE VORRICHTUNG MIT MITTEL ZUR BETÄTIGUNG EINER KOMPAKTEN VERFORMBAREN MEMBRAN

OPTICAL DEVICE WITH MEANS OF ACTUATING A COMPACT DEFORMABLE MEMBRANE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.07.2007 FR 0756618**

(43) Date de publication de la demande:
**07.04.2010 Bulletin 2010/14**

(73) Titulaire: **Commissariat à l'Énergie Atomique et aux Énergies Alternatives
75015 Paris (FR)**

(72) Inventeur: **BOLIS, Sébastien
F-38920 Crolles (FR)**

(74) Mandataire: **Ilgart, Jean-Christophe et al
BREVALEX
95 rue d'Amsterdam
75378 Paris Cedex 8 (FR)**

(56) Documents cités:
WO-A-2007/017089     WO-A-2008/076399
JP-A- 8 114 703       JP-A- 10 144 975
US-A- 4 226 507

EP 2 171 503 B1

**Description**

**DOMAINE TECHNIQUE**

La présente invention est relative à un dispositif optique à membrane déformable tel une lentille liquide à distance focale variable, une lentille liquide à correction d'aberrations optique en optique adaptative ou même un miroir à membrane déformable.

Parmi tous les types de lentilles liquides à distance focale variable, il en existe un formé d'un liquide optique travaillant à volume constant entre des parois parmi lesquelles au moins une peut être déplacée. Par liquide optique, on entend un liquide qui a des propriétés optiques appropriées à la réfraction de la lumière et qui possède un indice supérieur à 1, typiquement 1,4 ou 1,5. Par la suite on emploiera simplement le terme liquide. Toutefois les lentilles de ce type sont peu utilisées dans les appareils photos miniatures tels que ceux intégrés dans les téléphones-appareils photos car les structures mécaniques de variation de leur distance focale sont complexes, elles pénalisent l'encombrement, le coût et la fiabilité de ces lentilles.

Ces appareils photos miniatures, fonctionnant dans le visible, sont connus sous la dénomination anglo-saxonne CCM pour « compact camera module ». Ces derniers sont plutôt dotés de lentilles constituées d'un ou deux liquide sur lesquels est appliquée une tension afin de modifier leur mouillabilité.

Toutefois, de nombreux développements sont en cours dont notamment la fonction d'autofocus et la fonction zoom. On cherche lors de l'introduction de ces fonctions, à obtenir un temps de réponse le plus court possible. Plus globalement, on cherche à intégrer le plus possible les constituants des ces appareils photos miniatures pour réduire les coûts, l'encombrement et la consommation d'énergie.

Une autre application concerne les caméras fonctionnant dans l'infrarouge (IR). L'avancement en terme d'intégration est moindre, dans la plupart des cas, les optiques sont dissociées des caméras. Plusieurs développements sont en cours dont notamment l'intégration des optiques (création d'un module caméra), l'intégration de la fonction autofocus,... Pour l'instant, les solutions techniques associées ne sont pas connues et demandent à être définies.

Dans une application de miroir à membrane déformable, cette dernière est réfléchissante. On peut être amené à vouloir ajuster la distance focale du miroir et donc son rayon de courbure. Un tel miroir peut être utilisé en ophtalmologie OU en optique adaptative.

**ÉTAT DE LA TECHNIQUE ANTÉRIEURE**

Les dispositifs optiques à distance focale variable tels des lentilles liquides à distance focale variable constituées d'un liquide travaillant à volume constant entre deux parois dont au moins une est mobile ont fait l'objet de plusieurs brevets, par exemple : US-B-5 917 657, US-B-6-344 930, JP-A-10-144975, JP-A-08-114 703, US-A-5 138 494, WO 2003/102636, JP2002-243918 et JP-A-60 220301.

Aucun de ces brevets ne mentionne une application pour un appareil photo de téléphone portable, mais plutôt pour des lunettes, des microscopes optiques et des appareils photos numériques par exemple. En fait les structures mécaniques associées aux membranes sont toutes très complexes et ont un coût beaucoup trop élevé pour ce genre d'application.

Les figures 15A, 15B montrent deux exemples de lentilles liquides à distance focale variable, décrits dans le brevet US-B-5 917 657. Ces lentilles sont choisies car elles illustrent les lentilles les moins complexes.

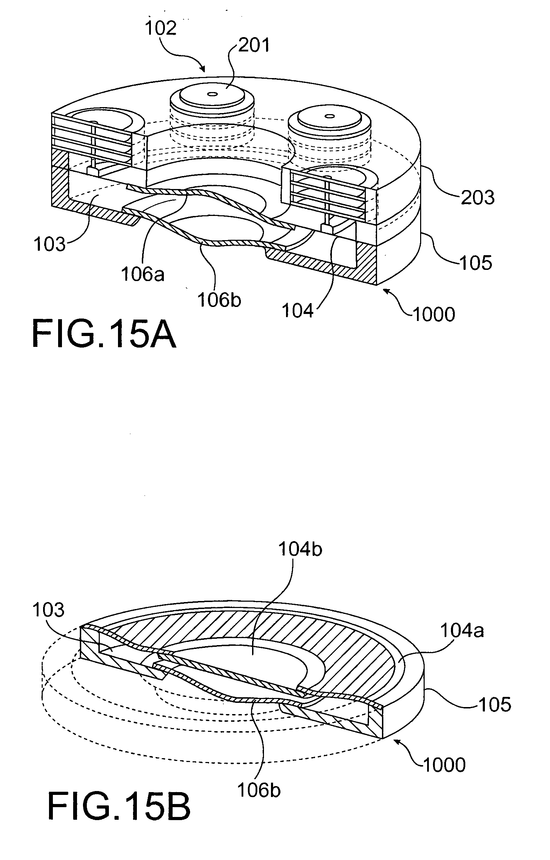

La lentille liquide 1000 de la figure 15A est constituée d'un premier film élastique transparent 106a central, d'un second film élastique transparent central 106b, d'un film élastique 104 périphérique et d'un conteneur périphérique 105. Les premier et second films élastiques transparents 106a, 106b sont placés en vis-à-vis. Le film élastique 104 périphérique est fixé autour du premier film élastique transparent 106a et l'ensemble forme une première membrane. La première membrane est ancrée sur une face du conteneur périphérique 105. La seconde membrane est constituée par le second film élastique. Elle est ancrée sur une autre face du conteneur périphérique. Tous ces éléments sont scellés hermétiquement les uns aux autres et contiennent un liquide 103. Les moyens d'actionnement de la lentille 102, dont la fonction est d'exercer une pression sur le liquide 103, agissent au niveau du film élastique périphérique 104. Ils sont formés de plusieurs actionneurs 201 disposés dans un conteneur 203 en forme de couronne. Ce conteneur est relativement épais. Leur action a lieu sur la membrane via un anneau rapporté sur le film élastique périphérique 104. Les deux conteneurs 105, 203 sont assemblés face à face. Les films élastiques transparents n'ont qu'un rôle optique et le film élastique périphérique n'a qu'un rôle mécanique.

Ces lentilles liquides 1000 présentent des inconvénients que l'on va lister.

Un inconvénient important est lié au type d'actionnement qui est encombrant et complexe notamment à cause du conteneur.

Les procédés de fabrication de ces lentilles sont unitaires et pluridisciplinaires. Ces procédés incluent des techniques issues de la plasturgie pour élaborer et mettre en forme les films, des techniques d'injection et d'usinage pour réaliser les conteneurs. Les procédés d'assemblage hermétique des films au conteneur sont différents selon la nature du scellement (plastique-plastique, plastique-verre, plastique-métal). De plus les scellements à réaliser ne sont pas tous situés dans un même plan, ce qui entraîne des manipulations délicates de films ou de plaques, ce qui complique considérablement le procédé employé et l'outillage nécessaire. Ces techniques ne sont pas compatibles avec les procédés classiques de fabrication par lots employés pour la réalisation de systèmes micro électromécaniques MEMS ou de systèmes micro optoélectromécaniques MOEMS. Leur coût reste en conséquence élevé et leur encombrement également.

De plus, il est difficile de positionner lors de l'assemblage le film élastique transparent au film élastique périphérique et de parfaitement positionner l'anneau lors de son report sur le film élastique périphérique. Une autre difficulté est de parfaitement positionner les actionneurs par rapport à l'anneau. Si le positionnement n'est pas parfait, il en résulte des aberrations optiques qui dégradent la qualité de l'image obtenue.

En outre, il est nécessaire que le film élastique périphérique qui va être déplacé par les moyens d'actionnement aussi bien au repos qu'en fonctionnement soit le plus parallèle possible par rapport à la surface du conteneur périphérique au niveau de l'ancrage. Sinon des aberrations optiques se produisent et elles dégradent la qualité de l'image obtenue. En effet sur la figure 15B, on a représenté en coupe la lentille liquide décrite dans le brevet US-B-5 917 657 à l'exception des moyens d'actionnement. Pour éviter tout risque d'aberration optique, les plans principaux dans lesquels s'étendent les portions de membrane au niveau du scellement au conteneur et du scellement entre les différents films constituant la membrane doivent être sensiblement parallèles. Il est très difficile d'arriver à ces résultats avec les multiples scellements préconisés.

En outre, puisque plusieurs films sont scellés hermétiquement ensemble, à la manière d'un patchwork, et au conteneur pour encapsuler le liquide, le risque de fuite n'est pas négligeable.

La demande de brevet WO 2007/017089 montre un dispositif optique à membrane déformable comportant des actionneurs de type tige filetée déplaçable en translation ou des actionneurs de type plaque solidaires la membrane mais pas du support.

La demande de brevet JP10144975 montre un dispositif optique à membrane déformable comportant un actionneur annulaire qui sollicite une plaque rigide placée en vis-à-vis de la membrane.

La demande de brevet US 4 226 507 montre un dispositif d'actionnement d'un miroir circulaire avec des paires d'actionneurs dans le prolongement l'un de l'autre fixés d'un côté au miroir et de l'autre sollicitant un bloc flottant situé au centre du miroir.

## EXPOSÉ DE L'INVENTION

La présente invention a justement pour but de fournir un dispositif optique à membrane déformable tel une lentille liquide ou un miroir qui ne possède pas les inconvénients mentionnés ci-dessus à savoir la complexité des moyens d'actionnement et leur encombrement, les aberrations optiques, le risque de fuite important, l'incompatibilité avec l'environnement micro-électronique, l'impossibilité d'être fabriqué par lots.

Pour y parvenir, la présente invention propose que les moyens d'actionnement soient formés de plusieurs actionneurs thermiques ou piézoélectriques de type micro-poutre répartis sur la périphérie de la membrane ce qui est simple et réduit l'encombrement des moyens d'actionnement de manière très significative.

Par micro-poutre, on entend un objet dont les dimensions caractéristiques de la section, c'est-à-dire son épaisseur et sa largeur, sont inférieures à sa longueur. Un facteur d'au moins 2 et idéalement supérieur à cinq existe entre la longueur et les dimensions caractéristiques de la section. Les ordres de grandeurs de longueur sont compris entre quelques dizaines de micromètres et quelques millimètres.

Plus particulièrement, la présente invention est un dispositif optique à membrane déformable selon la revendication 1. Il comporte une zone d'ancrage sur un support contribuant à emprisonner un volume constant de liquide en contact avec l'une de ses faces, une zone sensiblement centrale, apte à se déformer de manière réversible depuis une position de repos, des moyens d'actionnement pour déplacer le liquide au niveau de la zone centrale, sollicitant la membrane dans des parties situées entre la zone centrale et la zone d'ancrage. Les moyens d'actionnement sont formés de plusieurs actionneurs thermiques ou piézoélectriques de type micro-poutre, répartis à la périphérie de la membrane, ces micro-poutres ayant au moins une partie fixe solidaire du support et au moins une partie mobile venant en contact, lors d'un actionnement, avec la membrane dans une zone située entre la zone centrale et la zone d'ancrage.

La partie mobile peut être sans contact avec la partie sollicitée de la membrane en position de repos.

En variante, la partie mobile peut être en contact avec la partie sollicitée de la membrane en position de repos et même éventuellement solidaire de la partie sollicitée.

Les actionneurs de type micro-poutre peuvent être solidaires du support de manière indirecte.

Les actionneurs de type micro-poutre peuvent être solidaires du support par l'intermédiaire de la membrane au niveau de la zone d'ancrage.

En variante, les actionneurs de type micro-poutre peuvent être solidaires du support au-delà de la membrane.

Les actionneurs de type micro-poutre peuvent être en contact avec le liquide ou sans contact avec le liquide.

Il peut être avantageux notament au niveau encombrement que la membrane soit intégrée dans les actionneurs de type micro-poutre.

Dans le même but, les actionneurs de type micro-poutre peuvent être insérés entre deux couches de la membrane. L'encombrement des moyens d'actionnement est réduit au minimum.

Les micro-poutres peuvent être rectilignes ou courbées, ce dernier cas permettant de réduire la surface du support tout en augmentant la longueur de la micro-poutre. Cette variante est aussi favorable à la réduction de l'encombrement.

En position de repos, la membrane peut être concave, convexe ou sensiblement plane.

La membrane comporte au moins une couche continue occupant la surface totale de la membrane, les risques de fuites sont ainsi réduits.

Pour rendre l'actionnement de la membrane le plus homogène possible, on peut prévoir que les parties sollicitées soient incluses dans une zone renforcée de la membrane, située entre la zone centrale et la zone d'ancrage, entourant la zone centrale, cette zone renforcée ayant une rigidité supérieure à celle de la zone centrale et à celle de la zone d'ancrage.

La zone renforcée peut s'étendre jusqu'à la zone centrale sans empiéter sur elle ou s'arrêter avant la zone centrale.

De la même manière, la zone renforcé peut s'étendre jusqu'à la zone d'ancrage sans empiéter sur elle ou s'arrêter avant la zone d'ancrage.

La zone renforcée peut être formée de la couche continue épaissie.

En variante, la zone renforcée peut être formée d'un empilement d'au moins la couche continue et d'une couche additionnelle.

La zone d'ancrage peut être formée d'au moins la couche continue éventuellement amincie.

Une zone de garde intermédiaire peut être aménagée entre la zone d'ancrage et la zone renforcée et/ou entre la zone renforcée et la zone centrale, cette zone de garde intermédiaire étant formée d'au moins la couche continue éventuellement amincie.

La zone renforcée peut être en une seule partie ou morcelée en plusieurs portions.

La surface d'une partie sollicitée est inférieure à celle de la zone renforcée si elle est en une seule partie ou à celle d'une portion renforcée si elle est morcelée.

Les portions renforcées peuvent entourer chacune la zone centrale ou bien l'ensemble des portions renforcées peut entourer la zone centrale.

Les portions renforcées peuvent être sensiblement circulaires, en couronne, polygonales, des portions de croissant, des bandes radiales.

Lorsque les portions renforcées forment une couronne discontinue autour de la zone centrale, la membrane peut comporter en outre une zone de renfort continue entourant la zone centrale, cette zone de renfort étant plus rigide que les portions renforcées, et étant située entre la zone centrale et les portions renforcées.

La zone renforcée peut être une couronne ou une pluralité de portions de couronne munie de doigts radiaux se projetant vers la zone centrale ou vers la zone d'ancrage.

Le support peut être sensiblement plan ou posséder une cuvette pour accueillir le liquide.

Le support peut comporter deux substrats assemblés l'un à l'autre, la membrane étant solidaire de l'un des substrats, les actionneurs de type-micro-poutre étant solidaires de l'autre substrat.

Le support peut comporter un cadre et une seconde membrane ancrée sur le cadre.

Le support peut comporter un cadre et une plaque transparente fixée au cadre contribuant à former une cuvette pour le liquide, la plaque transparente ayant des faces sensiblement planes et parallèles ou une face externe à la cuvette sensiblement concave ou une face externe à la cuvette sensiblement convexe.

Des moyens capacitifs de mesure de l'épaisseur du liquide peuvent être prévus au niveau d'au moins une partie sollicitée.

Des moyens d'asservissement des moyens d'actionnement en fonction de l'épaisseur de liquide (4) mesurée peuvent être prévus.

Le dispositif optique est réalisé par des techniques de la microélectronique ou des micro systèmes.

La membrane peut être réalisée à base de matériaux organiques tels que le polydiméthylsiloxane, le polyméthacrylate de méthyle, le polyéthylène téréphtalate, le polycarbonate, le parylène, les résines époxydes ou de matériaux minéraux tels que le silicium, l'oxyde de silicium, le nitrure de silicium, le carbure de silicium, le silicium polycristallin, le nitrure de titane, le carbone diamant, l'oxyde d'étain et d'indium, l'aluminium.

Le liquide peut être choisi parmi le carbonate de propylène, l'eau, un liquide d'indice, une huile optique ou encore un liquide ionique.

Le dispositif optique une lentille liquide ou un miroir.

La présente invention concerne également un dispositif de prise de vue qui comporte au moins un dispositif optique ainsi caractérisé.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

les figures 1A à 1E montrent des exemples de dispositifs optiques selon l'invention dépourvus de partie renforcée ;
les figures 2A, 2B montrent schématiquement les moyens d'actionnement du dispositif optique de l'invention ;
les figures 3.1 à 3.15 montrent en coupe différentes variantes de la membrane du dispositif optique de l'invention ;
les figures 4A, 4B, 4C montrent encore d'autres variantes du dispositif optique de l'invention sans les moyens d'actionnement ;
les figures 5A à 5E montrent différentes variantes de la zone renforcée en une seule partie ;
les figures 6A à 6I montrent différentes variantes de la zone renforcée morcelée ;
les figures 7A à 7N montrent en coupe différentes configurations des moyens d'actionnement ;
la figure 8 montre la contrainte appliquée sur la zone renforcée morcelée par les moyens d'actionnement ;
les figures 9A, 9B montrent deux exemples du dispositif optique utilisés pour exposer des exemples numériques des différents paramètres ;
les figures 10A à 10E montrent différentes étapes d'un procédé de réalisation du dispositif optique de l'invention ;
la figure 11 montre un dispositif optique comportant deux supports assemblés l'un à l'autre ;
la figure 12 montre un dispositif optique selon l'invention équipé de moyens de mesure capacitifs de l'épaisseur du liquide et des moyens d'asservissement des moyens d'actionnement en fonction de l'épaisseur du liquide ;
les figures 13A à 13E montrent différentes configurations du support du dispositif optique selon l'invention ;
les figures 14A, 14B montrent deux dispositifs de prise de vue employant au moins un dispositif optique de l'invention
les figures 15A, 15B déjà décrites, montrent des lentilles liquides de l'art antérieur.

Des parties identiques, similaires ou équivalentes des différentes figures décrites ci-après portent les mêmes références numériques de façon à faciliter le passage d'une figure à l'autre.
Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

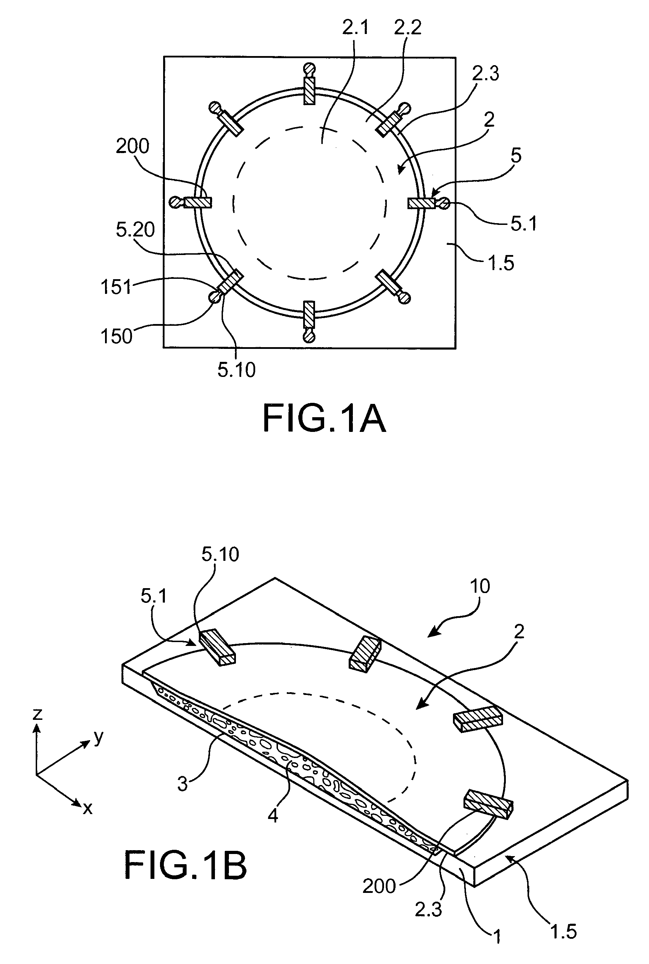

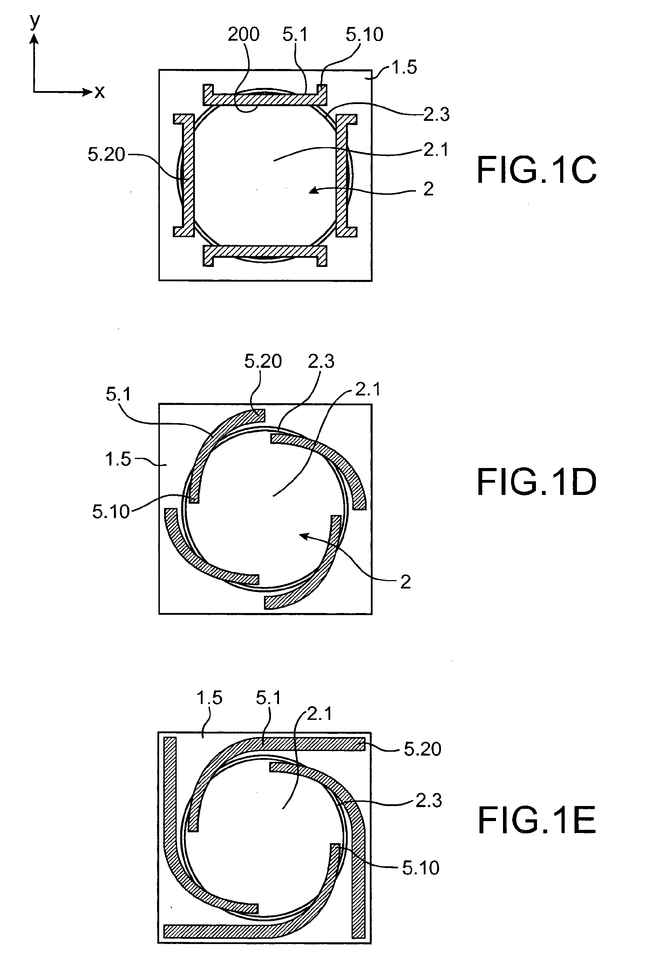

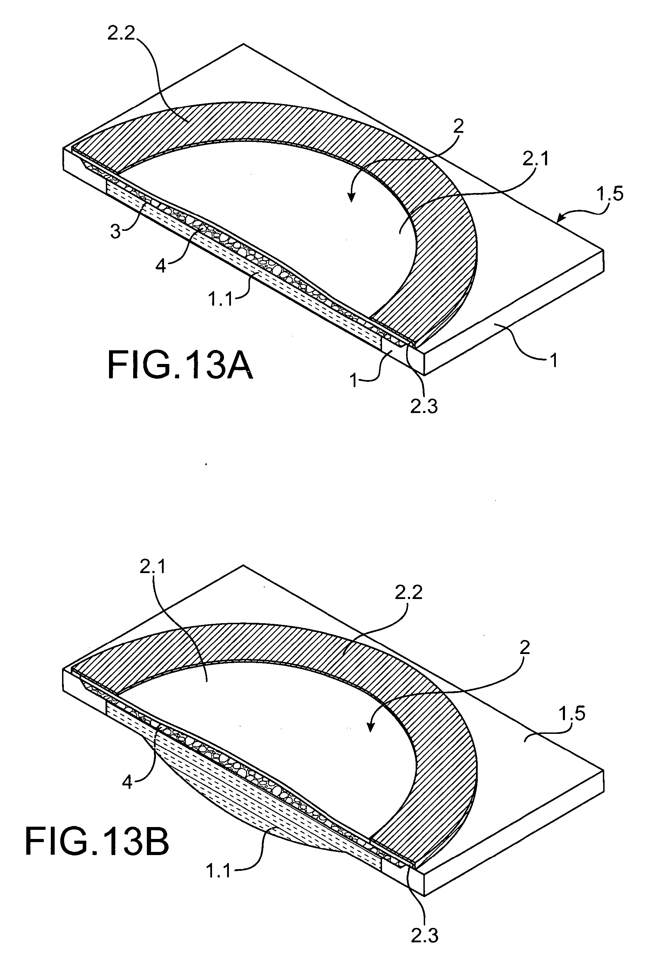

On va maintenant s'intéresser aux figures 1A, 1B, 1C qui montrent des schémas généraux en vue de dessus d'exemples de dispositifs optiques à membrane déformable simplifiés objets de l'invention.
On suppose que ces dispositifs optiques sont des lentilles liquides mais cette application n'est pas limitative, il pourrait s'agir de miroirs à membrane déformable.
La lentille liquide 10 comporte une membrane 2 dont la périphérie est ancrée de manière étanche sur un support 1.5. La zone de la membrane qui est ancrée sur le support 1.5 est appelée zone d'ancrage et est référencée 2.3. Dans cet exemple l'ancrage se fait au niveau d'un cadre 1 du support 1.5.
Le cadre 1 contribue à délimiter une cuvette 3 formée dans le support 1.5 en la bordant. La cuvette 3 est destinée à renfermer un volume constant de liquide 4. Le support 1.5 s'étend selon un plan principal x,y. La cuvette 3 possède un fond 3.1. Un faisceau optique (non représenté) est destiné à traverser la lentille liquide 10, en se propageant à travers la membrane 2, le liquide 4 et le support 1.5 au niveau du fond 3.1 de la cuvette 3. Le cadre 1 et la cuvette 3 ne sont pas nécessaires, le support 1.5 pouvant être un substrat sensiblement plan. Le fond 3.1 est transparent pour le faisceau optique utilisé.
Le support 1 peut être monolithique comme sur la figure 1B ou être formé par le cadre 1 assemblé au fond 3.1 de la cuvette 3 comme sur la figure 13A.
Le liquide 4, dont le volume est constant, peut être du carbonate de propylène, de l'eau, un liquide d'indice, une huile optique ou encore un liquide ionique. Il est choisi notamment pour ses propriétés optiques dans le cas d'une lentille liquide.
Si le dispositif optique était un miroir à membrane déformable, la membrane serait réfléchissante, puisqu'une telle membrane est destinée à réfléchir un faisceau optique incident. Le champ optique ne serait pas transparent.
Par membrane, on entend tout film souple faisant office de barrière entre le liquide 4 et un milieu fluide se trouvant de l'autre côté de la barrière par rapport au liquide 4. Ce fluide peut être tout simplement de l'air ou un autre gaz ou même un autre liquide. La membrane 2, au moins dans la zone centrale 2.1, est en contact avec le liquide 4 d'un côté et avec le fluide de l'autre au moins au niveau d'une zone centrale 2.1 appelée champ optique aussi bien dans l'application d'une lentille liquide que dans celle d'un miroir. Par la suite, on a employé parfois l'expression zone centrale parfois l'expression champ optique. Dans ce contexte, ces expressions sont équivalentes. Dans l'application lentille liquide, c'est le champ optique qui va être traversé par le faisceau optique et ce dernier est transparent pour le faisceau optique. Dans l'application miroir, la membrane est réfléchissante dans la zone centrale où le faisceau optique est incident. La zone centrale a une première face en contact avec le liquide et une seconde face opposée à la première face qui forme un dioptre. On choisit le matériau de la membrane de manière à ce qu'elle puisse résister à des sollicitations extérieures telles que la dilatation du liquide, les chocs, le poids du liquide du à la gravité, sans se percer.

La membrane est représentée circulaire sur les figures 1A, 1B, 1C mais d'autres formes sont envisageables.

Pour pouvoir faire varier la distance focale du dispositif optique, on va déplacer à volume constant le liquide de manière à faire varier l'épaisseur de liquide qui se trouve sous la membrane au niveau de la zone centrale 2.1. On prévoit des moyens d'actionnement 5 qui peuvent passer d'une position de repos à au moins une position de travail dans laquelle ils déforment la membrane 2. Ces moyens d'actionnement sont formés de plusieurs actionneurs de type micro-poutre 5.1 à actionnement piézoélectrique ou thermique. Les actionneurs 5.1 sont répartis le long la périphérie de la membrane 2. Les micro-poutres comportent chacune au moins une partie fixe 5.10 solidaire mécaniquement du support 1.5 et au moins une partie mobile 5.20 venant en contact, lors de l'actionnement et en position de travail, avec une partie 200 de la membrane 2 de manière à la déformer, cette partie 200 de la membrane, dite partie sollicitée 200, se trouvant dans une zone située entre le champ optique 2.1 et la zone d'ancrage 2.3. La partie mobile de la poutre peut être une de ses extrémités comme sur les figures 1A, 1B ou une portion médiane comme illustré sur la figure 1C. La partie fixe peut être au moins une extrémité de la micro-poutre. Sur les figures 1, les parties sollicitées 200 ne sont pas directement visibles, elles sont masquées par les actionneurs 5.1.

La zone centrale 2.1 de la membrane est suffisamment souple et élastique pour pouvoir se déformer de manière réversible lorsqu'elle est activée par le déplacement des parties sollicitées 200 par les actionneurs 5.1. L'adhérence de la membrane au support 1.5, au niveau de sa zone d'ancrage 2.3, doit être suffisante pour supporter le déplacement du reste de la membrane lors de l'actionnement. La zone d'ancrage 2.3 n'a pas de contact avec le liquide 4.

Sur la figure 1A, on a représenté huit actionneurs 5.1 radiaux. Ce nombre n'est qu'un exemple non limitatif, il pourrait être plus grand. On cherche à ce que les parties sollicitées 200 de la membrane 2 soient réparties sensiblement régulièrement autour de la zone centrale 2.1 pour que le déplacement puisse se faire de manière sensiblement régulière. Les micro-poutres sont rectilignes. Sur la figure 1A, on a représenté aussi un plot d'alimentation 150 et une piste conductrice 151 reliés électriquement à chacun des actionneurs de type micro-poutre, cette piste 151 et ce plot 150 étant utilisés lors de l'actionnement pour appliquer la tension appropriée à l'actionneur de type micro-poutre.

Sur la figure 1C, il y a quatre actionneurs 5.1 disposés sensiblement en carré selon des cordes du bord de la membrane 2, les extrémités de chacune des micro-poutres étant solidaires du support 1.5. Les micro-poutres ont sensiblement la forme de ponts dont les piliers, situés aux extrémités sont solidaires du support. Ce sont les parties médianes de la micro-poutre qui sollicitent la membrane 2, elles correspondent au tablier du pont.

Les micro-poutres ne sont pas forcément rectilignes. On se réfère à la figure 1D. Sur cette figure, elles sont courbées. Sur la figure 1E, elles sont toujours courbées, mais sont plus longues car la partie solidaire mécaniquement du support se termine par une portion rectiligne.

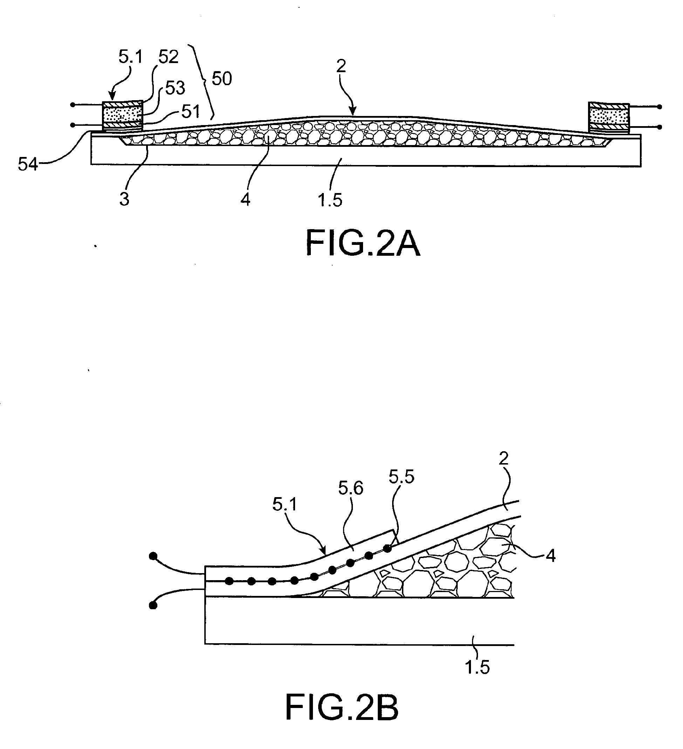

Des moyens d'actionnement piézoélectriques sont visibles sur la figure 2A et des moyens d'actionnement de type thermiques sont visibles sur la figure 2B. Pour réaliser ces moyens d'actionnement, on peut se référer par exemple à l'article « The constituent équations of piezoelectric multilayer bending actuators in closed analytical form and experimental results » Sensors and actuators A 130-131 (2006) 91-98 en ce qui concerne les actionneurs piezoelectriques et à l'article « Thermally actuated microprobes for new wafer probe card » IEEE Journal of microelectromechanical systems, vol 8, N°1, Mars 1999 en ce qui concerne les actionneurs thermiques.

Sur la figure 2A, l'actionneur piézoélectrique 5.1 comporte une première partie 50 avec au moins une couche de matériau piézoélectrique 53 prise en sandwich entre deux électrodes 51, 52. Cette première partie 50 surmonte une partie passive 54 qui peut être un bicouche d'un composite avec des fibres de verre sur une couche de nickel. La partie passive 54 est sus-jacente à la membrane 2, elle est insérée entre la membrane 2 et la première partie 50. Les électrodes 51, 52 sont destinées à être alimentées en énergie lors de l'actionnement. Il se produit alors une courbure de la poutre qui vient déplacer la membrane 2. La courbure peut être dans un sens ou dans l'autre suivant le type de matériau piézoélectrique utilisé.

Sur la figure 2B, l'actionneur 5.1 est un actionneur thermique à effet bimorphe. Son principe est le suivant : on utilise un empilement de deux matériaux ayant des coefficients de dilatation thermiques très différents. Les deux constituants de l'empilement bimorphe prennent en sandwich des moyens de chauffage 5.5. En faisant circuler un courant dans les moyens de chauffage lors de l'actionnement, il se produit par effet Joule un échauffement qui a pour effet de dilater un des constituants de l'empilement plus que l'autre. Le constituant qui se dilate le plus est à l'opposé de la membrane 2 par rapport aux moyens de chauffage 5.5 et celui qui se dilate le moins se trouve du côté de la membrane 2. Dans l'exemple décrit qui n'est pas limitatif, l'actionneur 5.1 est intégré dans la membrane 2, car l'un des constituants de l'empilement bimorphe est la membrane 2. Il peut s'agir d'oxyde de silicium. L'autre constituant de l'empilement, référencé 5.6 peut être en aluminium par exemple. On décrira par la suite différentes variantes des moyens d'actionnement. De tels actionneurs de type micro-poutre sont incontestablement beaucoup moins encombrants en épaisseur que ceux de l'art antérieur et notamment ceux qui sont magnétiques puisqu'il faut prévoir de loger le bobinage dans le support.

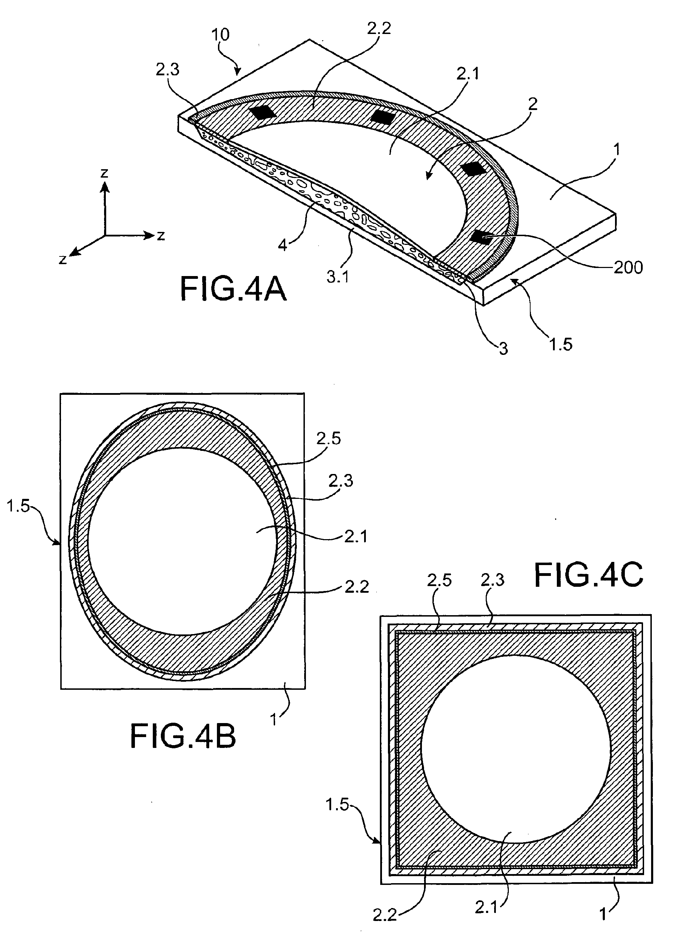

On va maintenant s'intéresser à la membrane 2. Sur les figures 1, la membrane 2 a été représentée circulaire, mais dans d'autres modes de réalisation, elle pourrait être elliptique, oblongue ou même en quadrilatère ou autre. On peut se référer aux figures 4A, 4B.

La membrane 2 peut être monocouche comme sur la figure 2A ou multicouche, mais au moins une couche de la membrane s'étend sur toute sa surface. Les risques de fuites sont réduits puisqu'on ne va pas assembler plusieurs parties placées les unes à côté des autres à la manière d'un patchwork comme dans l'art antérieur. Sur la figure 2A, l'unique couche de la membrane 2 occupe toute la surface de la membrane.

La membrane 2 peut être homogène comme sur la figure 2A, par homogène on entend qu'elle possède des propriétés physiques constantes et les mêmes sur toute sa surface.

Il peut être avantageux pour améliorer l'efficacité des moyens d'actionnement 5 vis à vis du déplacement de liquide 4 que la membrane 2 soit hétérogène et que ses parties sollicitées 200 soient incluses dans une zone renforcée 2.2 de la membrane 2, cette zone renforcée 2.2 entourant la zone centrale 2.1. Par zone renforcée 2.2, on entend une zone dont la rigidité est supérieure à celle de la zone centrale 2.1 et à celle de la zone d'ancrage 2.3. La zone renforcée 2.2 s'étend de manière à entourer la zone centrale 2.1 comme illustré sur les figures 4A, 4B, 4C. Les parties sollicitées 200 ne sont visibles que sur la figure 4A.

La zone renforcée 2.2 peut être formée d'une seule partie. Elle entoure la zone centrale 2.1. Elle peut prendre sensiblement la forme d'une couronne autour de la zone centrale 2.1 comme sur la figure 4A. En variante, la zone renforcée 2.2 peut être subdivisée en plusieurs portions renforcées 2.2a. S'il y a plusieurs portions renforcées 2.2a, leurs formes peuvent être variées comme on le verra ultérieurement. Elles peuvent former une succession sensiblement régulière qui s'étend autour de la zone centrale ou bien chacune d'entre elles peut entourer la zone centrale de manière à éviter des aberrations optiques. Chaque partie sollicitée 200 a une superficie inférieure à celle de la zone renforcée 2.2, si elle est en une seule partie ou bien à celle de chacune des portions renforcées 2.2a, si elle est fragmentée.

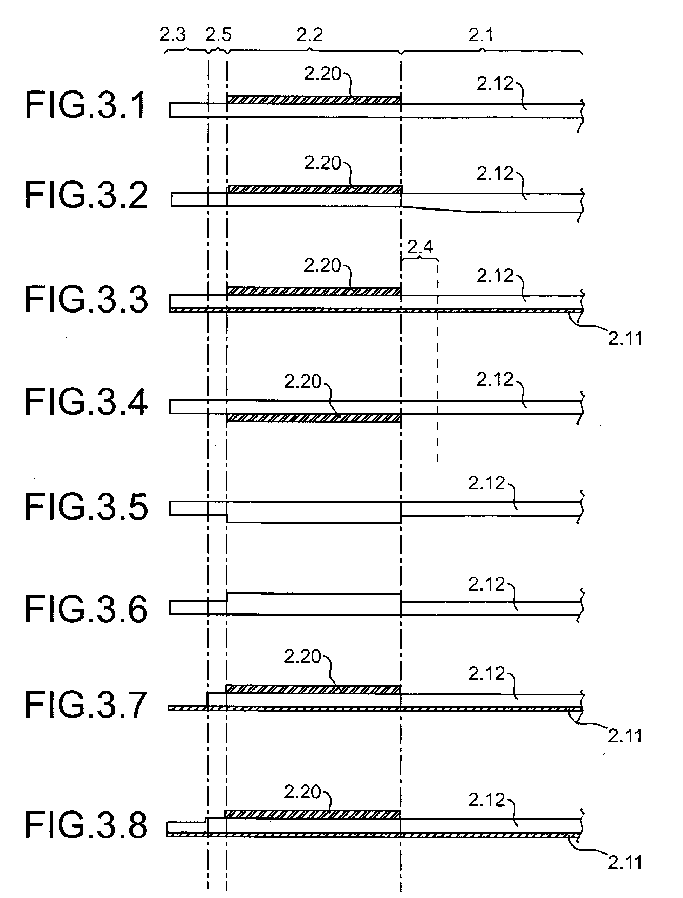

On va voir en se référant aux figures 3.1 à 3.15 différentes configurations possibles pour la membrane 2 lorsqu'elle est hétérogène. Dans ces configurations, ce qui est important c'est qu'au moins une couche continue 2.12 de la membrane 2 occupe toute sa surface.

Pour dimensionner correctement les différentes parties de la membrane 2, deux paramètres doivent être connus. Ils dépendent de l'application que l'on recherche. Il s'agit de la surface de la zone centrale 2.1 puisqu'elle correspond au champ optique désiré pour la lentille ou le miroir ainsi que de la flèche maximale de la zone centrale 2.1 qui est nécessaire pour réaliser la variation de la distance focale recherchée.

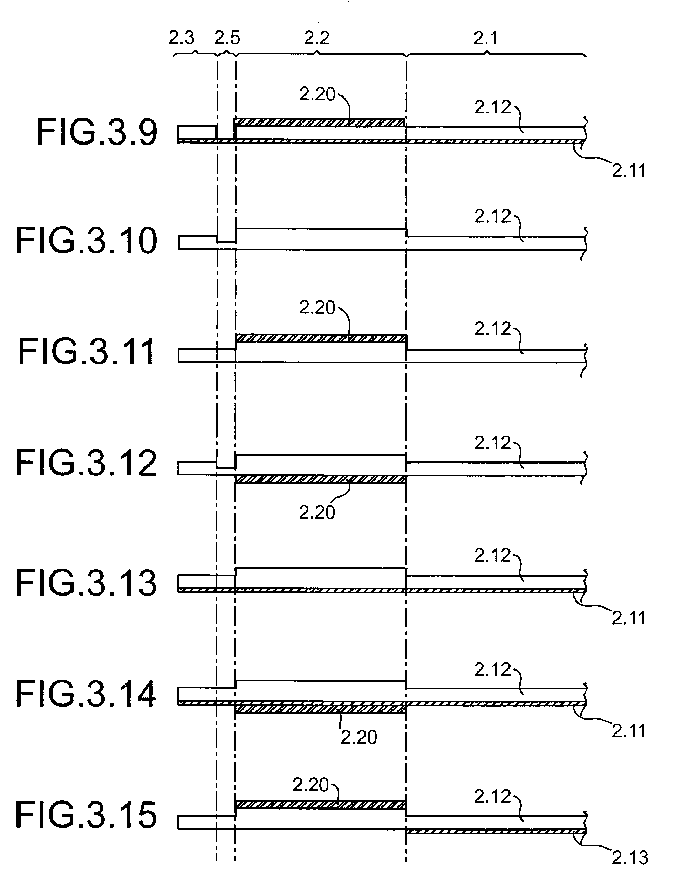

La zone centrale 2.1 peut être monocouche (comme sur les figures 3.1, 3.2, 3.4-3.6, 3.10-3.12) ou multicouche (comme sur les figures 3.3, 3.7-3.9, 3.13, 3.14, 3.15). Si elle est monocouche, c'est cette couche 2.11 qui est continue sur toute sa surface, si elle est multicouche au moins une de ses couches 2.11 ou 2.12 est continue et s'étend sur toute sa surface. Dans l'exemple des figures 3.3, 3.7-3.9, 3.13, 3.14, la zone centrale 2.1 multicouche comporte deux couches 2.12 et 2.11 superposées, et ces deux couches 2.12, 2.11 s'étendent sur toute la surface de la membrane. Ce n'est pas une obligation, il suffit que seule l'une d'entre elle assure la continuité. Sur la figure 3.15 la zone centrale 2.1 est bicouche et seule l'une des couches 2.12 est continue sur toute la surface, l'autre couche est référencée 2.13 est limitée à la zone centrale.

Le choix de la zone centrale 2.1 multicouche est fait pour répondre à des exigences du procédé de fabrication ou pour que la lentille liquide ou le miroir atteigne certaines performances. La zone centrale 2.1 peut ainsi être composée d'un seul matériau ou de plusieurs selon qu'elle est monocouche ou multicouche. La limite élastique de la zone centrale 2.1 est suffisante pour garantir une déformation dans le domaine élastique et ainsi une réversibilité de la déformation, c'est-à-dire un retour à une position initiale une fois que les moyens d'actionnement ont fini d'agir. De nombreux matériaux présentent à la fois les propriétés optiques de transmission, par exemple dans le visible, et d'élasticité requises. On citera par exemple des matériaux organiques comme le polydiméthylsiloxane (PDMS), le polyméthacrylate de méthyle (PMMA) mais aussi le polyéthylène téréphtalate (PET), le polycarbonate (PC), le parylène, les résines époxydes, dont le module d'Young est compris entre quelques 100 MPa et quelques GPa ou des matériaux minéraux comme l'oxyde de silicium, le nitrure de silicium dont le module d'Young vaut quelques centaines de GPa.

La zone centrale 2.1 peut avoir une épaisseur sensiblement constante, de l'ordre de quelques micromètres pour les matériaux minéraux voire plus pour les matériaux organiques, comme sur les figures 3.1, 3.3 à 3.14 ou au contraire une épaisseur variable comme sur la figure 3.2. Le choix du profil avec épaisseur variable permet d'ajuster le dioptre de la lentille liquide, côté membrane.

La zone renforcée 2.2 doit être suffisamment rigide pour répercuter sur le liquide 4 la pression appliquée par les moyens d'actionnement 5 et donc générer les déplacements du liquide 4 recherchés. La zone renforcée 2.2 comporte la couche 2.12 issue de la zone centrale 2.1 mais cette couche 2.12 telle qu'elle est présente dans la zone centrale 2.1 n'est pas suffisamment rigide. Pour augmenter la rigidité de la couche ou des couches 2.11, 2.12 issues de la zone centrale 2.1, on peut leur adjoindre au moins une couche additionnelle 2.20 d'un matériau ayant un module d'Young plus élevé que celui du matériau ou des matériaux des couches 2.12, 2.11 issues de la zone centrale 2.1, ce qui laisse un large choix en terme de matériaux puisque les propriétés optiques de transparence ne sont plus requises, la zone renforcée 2.2 n'ayant plus besoin d'être transparente au rayonnement car hors du champ optique. Ce sont plutôt des propriétés d'adhérence qui sont recherchées dans le choix de la couche additionnelle 2.20. Cette variante est illustrée sur les figures 3.1-3.4, 3.7-3.9, 3.11, 3.12, 3.14. La couche additionnelle 2.20 peut se trouver sur l'une ou l'autre face de la zone renforcée 2.2, c'est-à-dire soit du côté du liquide 4, soit de l'autre côté. La couche additionnelle se trouve côté liquide 4 sur les figures 3.12 et 3.14 et de l'autre côté sur les figures 3.1-3.3, 3.7-3.9, 3.11 et 3.15. Le choix du matériau et de l'épaisseur de la couche additionnelle 2.20 peut se faire de manière expérimentale et itérative.

Quelques matériaux pour la couche additionnelle 2.20 sont listés ci-dessous. Il peut s'agir de matériaux métalliques tels que le titane, le nitrure de titane, l'aluminium dont l'épaisseur sera de l'ordre de quelques micromètres et dont le module d'Young est compris entre quelques dizaines de GPa à quelques centaines de GPa. Il peut s'agir de matériaux tels que l'oxyde de silicium, le nitrure de silicium dont l'épaisseur sera de l'ordre de quelques micromètres et dont le module d'Young est compris entre quelques dizaines de GPa à quelques centaines de GPa. Enfin il peut s'agir de matériaux organiques tels que les polymères photosensibles et en particulier les benzocyclobutènes (BCB) dont l'épaisseur sera de l'ordre de quelques dizaines de micromètres et dont le module d'Young est de quelques GPa.

Lorsque les moyens d'actionnement 5 sont des moyens d'actionnement thermiques formés d'un empilement bimorphe et que la membrane 2 est un constituant du bimorphe, ce constituant peut être celui de la couche qui s'étend sur toute la surface de la membrane ou celui de la couche additionnelle.

En variante ou en combinaison, pour obtenir la rigidité recherchée pour la zone renforcée 2.2, il est possible d'épaissir la couche 2.12 issue de la zone centrale 2.1. Un tel épaississement est illustré sur les figures 3.5, 3.6, 3.10, 3.1, 3.12, 3.13, 3.14, 3.15. S'il y a plusieurs couches 2.11, 2.12 issues de la zone centrale 2.1, il est possible d'épaissir une ou plusieurs de ces couches, en l'occurrence la couche 2.11, comme sur la figure 3.14. Cette variante risque d'être moins performante que l'ajout de la couche additionnelle, mais dans certaines applications elle est suffisante. Dans ce cas, la conception des moyens d'actionnement 5 influe sur l'épaisseur de la couche 2.12 issue de la zone centrale 2.1 au niveau de la seconde zone périphérique 2.2 et cette épaisseur peut être doublée par rapport à celle de la couche 2.12 au niveau de la zone centrale 2.1.

La zone d'ancrage 2.3 peut être formée du même matériau que la zone centrale 2.1 dans la mesure où cette dernière est formée d'un seul matériau. Cette variante est représentée sur les figures 3.1, 3.2, 3.4, 3.5, 3.6.

Si la zone centrale 2.1 est multicouche et formée de plusieurs matériaux, la zone d'ancrage 2.3 peut reprendre tous les matériaux de la zone centrale 2.1 comme sur les figures 3.3 ou se limiter à un ou quelques un d'entre eux comme illustré sur la figure 3.7.

L'épaisseur de la zone d'ancrage 2.3 est de préférence similaire à celle de la zone centrale 2.1, c'est-à-dire de l'ordre de quelques micromètres pour les matériaux minéraux et de l'ordre de quelques dizaines de micromètres voire plus pour les matériaux organiques. Il est bien sûr possible que l'épaisseur de la zone d'ancrage 2.3 soit différente de celle de la zone centrale 2.1, tout en restant dans le même ordre de grandeur. On peut se référer aux figures 3.2 et 3.8. Afin d'optimiser l'adhérence de la zone d'ancrage 2.3 sur le cadre 1, il est possible de prévoir un traitement préalable du cadre avant la fixation. On pourra, par exemple, réaliser un traitement de surface avec un plasma par exemple avec de l'oxygène ou bien effectuer un dépôt avec une couche de matériau primaire d'adhérence.

Le comportement mécanique de la zone centrale 2.1 dépend de la surface de.la zone renforcée 2.2 et de la force des moyens d'actionnement 5. Le dimensionnement de la zone centrale 2.1 peut se faire en s'appuyant sur l'ouvrage « Théorie des plaques et des coques » de S. Timoshenko, éditeur Librairie Polytechnique, Ch Béranger, 1951 comme on le verra plus loin.

Dans cet ouvrage sont présentées plusieurs formules approchées relatives à une plaque circulaire uniformément chargée. En fonction de la flèche maximale $\omega_o$ recherchée pour la zone centrale 2.1 et de son épaisseur, différents modèles sont présentés dans cet ouvrage permettant de dimensionner correctement la zone renforcée 2.2.

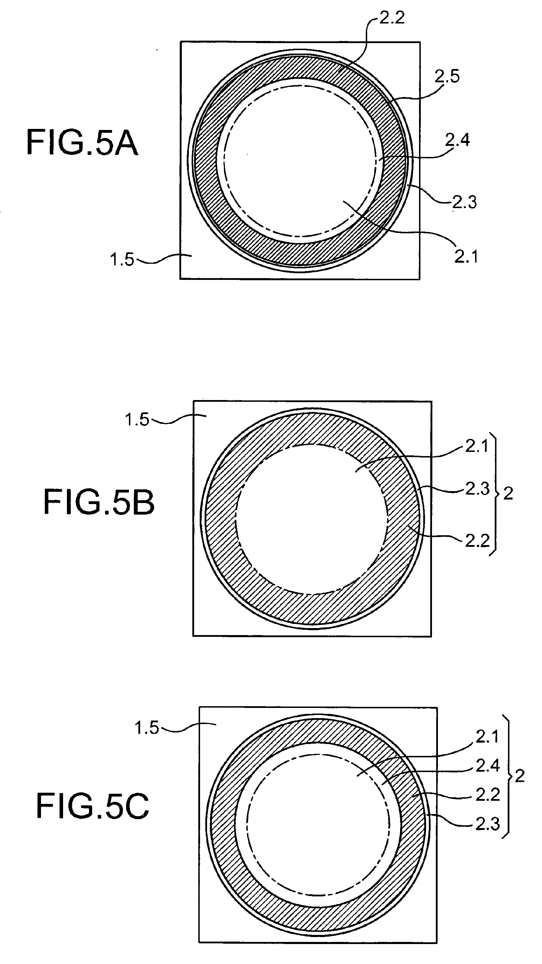

On va voir maintenant, en se reportant aux figures 5A à 5E, différentes configurations possibles pour la zone renforcée 2.2. La zone renforcée 2.2 s'arrête dans tous les cas avant le champ optique 2.1, elle n'empiète pas sur lui. Elle peut aller jusqu'à la zone d'ancrage 2.3 mais n'empiète pas sur elle, non plus puisqu'au niveau de la zone d'ancrage 2.3, il n'y a pas de liquide et la membrane ne peut se déplacer. Par contre, les moyens d'actionnement 5 peuvent être en contact avec la membrane 2 également au niveau de la zone d'ancrage 2.3. Cet aspect sera décrit plus loin.

Sur ces figures 5A à 5E les moyens d'actionnement ne sont pas représentés, ni les parties sollicitées. Sur les figures 5A à 5C, la zone renforcée 2.2 est en une seule partie, elle est en forme de couronne qui entoure le champ optique 2.1. Ce que l'on va décrire s'appliquerait aussi bien si elle était fragmentée. Il est possible, comme sur la figure 5B, que la zone renforcée 2.2 commence dès la limite du champ optique 2.1. Les pointillés schématisent la limite du champ optique 2.1.

Il est bien sûr possible d'interposer une zone de garde 2.4 intermédiaire entre le champ optique 2.1 et la zone renforcée 2.2 comme sur la figure 5A et la figure 5C. Cela permet d'éviter toute dégradation des performances optiques du champ optique 2.1.

Une zone de garde 2.5 intermédiaire peut être interposée entre la zone renforcée 2.2 et la zone d'ancrage 2.3 comme sur la figure 5A. Elle se trouve au dessus du liquide, mais ce dernier n'est pas visible sur les figures 5A à 5C. La zone renforcée 2.2 peut atteindre la zone d'ancrage 2.3 sans empiéter sur elle comme sur la figure 5B et la figure 5C. Il n'y a plus de zone de garde 2.5 intermédiaire. Les zones de garde intermédiaire 2.4, 2.5 ont été également illustrées sur certaines figures 3. Elles sont formées d'au moins la couche continue 2.11 et/ou 2.12 éventuellement amincie. La zone de garde intermédiaire 2.5 située entre la zone centrale 2.1 et la zone renforcée peut être différente de la zone de renfort 2.6.

Les figures 4B, 4C montrent respectivement des configurations de membrane carrée ou oblongue, dans ce cas en ellipse. Dans ces deux configurations, le champ optique 2.1 est circulaire. La zone renforcée 2.2 est limitée intérieurement par un cercle et extérieurement respectivement par un carré ou une ellipse.

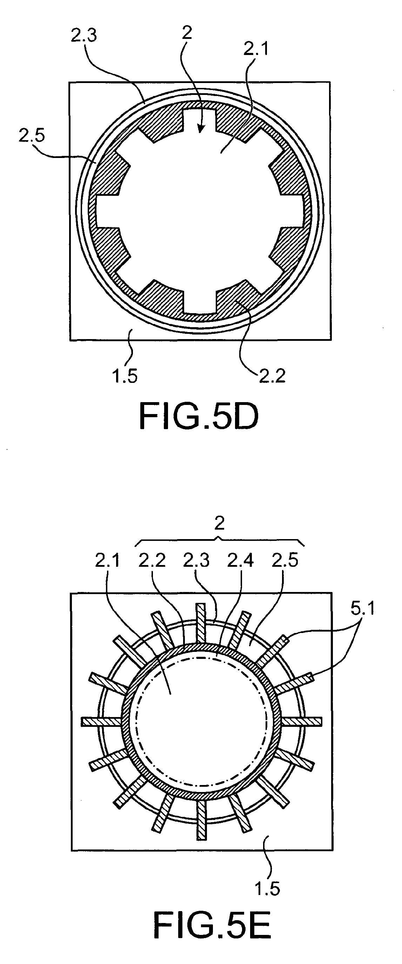

Sur la figure 5D, la membrane 2 est circulaire, la zone renforcée 2.2 unique prend la forme d'une couronne munie de doigts radiaux, se projetant vers le champ optique 2.1. Ces doigts prennent la forme de secteurs de couronne, mais d'autres formes sont possibles, cette forme n'est pas limitative. Il y a une zone de garde 2.5 entre la partie sollicitée 2.2 et la zone d'ancrage 2.3. On pourra placer un actionneur de type micro-poutre au niveau de chacun des doigts radiaux. On ne les a pas illustrés sur la figure 5D.

Sur la figure 5E, la membrane 2 est circulaire, la zone renforcée 2.2 est unique, elle est en forme de couronne du côté du champ optique 2.1 et la couronne est munie de doigts radiaux qui se projettent vers la zone d'ancrage 2.3. Les doigts sont en forme de bande mais d'autres formes sont possibles. Il y a une zone de garde 2.5 intermédiaire morcelée entre la couronne de la zone renforcée 2.2 et la zone d'ancrage 2.3 entre les doigts radiaux. Des actionneurs de type micro-poutre 5.1 sont schématisés, ils recouvrent les doigts radiaux, n'empiètent pas sur la couronne et se prolongent au-delà des doigts radiaux sur le support 1.5. Au niveau des doigts radiaux, on retrouve en conséquence une superposition de hachures. Les parties sollicitées correspondent aux doigts radiaux mais pas à la couronne.

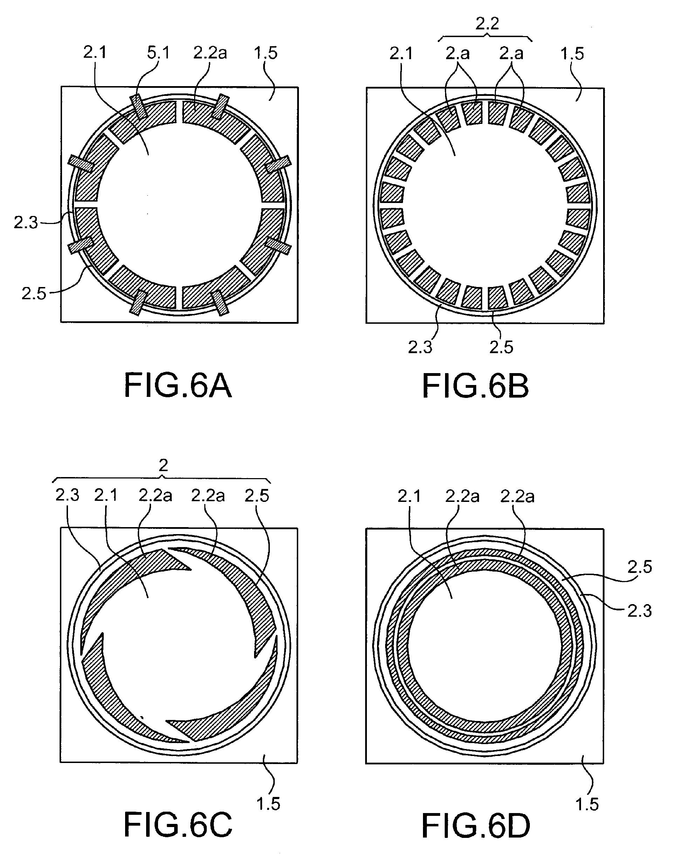

Jusqu'à maintenant sur les figures 5, on n'a décrit que des configurations avec une zone renforcée 2.2 en une seule partie. On va donc s'intéresser à des configurations de la membrane 2 pour lesquelles la zone renforcée 2.2 est fractionnée en plusieurs portions renforcées 2.2a. Au moins un actionneur 5.1 coopère avec chacune de ces portions renforcées 2.2a. Les actionneurs 5.1 de type micro-poutre sont schématisés sur la figure 6A seulement.

Sur la figure 6A, les portions renforcées 2.2a sont des secteurs de couronne, dans l'exemple non limitatif la couronne est circulaire. Il y en a 8 sur la figure 6A et 24 sur la figure 6B. Un nombre différent de portions renforcées 2.2a est bien sûr possible. Sur la figure 6C, les portions renforcées 2.2a sont des portions de croissants dont le bord extérieur est une portion de cercle concentrique avec le bord de la membrane 2. Il y a quatre portions renforcées 2.2a sensiblement identiques. On pourrait envisager qu'elles ne soient pas identiques. Sur la figure 6D, les portions renforcées 2.2a sont des couronnes concentriques. Il y en a deux. On pourrait envisager que l'une au moins d'entre elle soit munie de doigts radiaux de manière similaire aux figures 5D, 5E. Cette variante n'est pas représentée pour ne pas multiplier inutilement le nombre de figures. Sur les figures 6C, 6D, il y a une zone de garde 2.5 intermédiaire entre la zone d'ancrage 2.3 et la zone renforcée 2.2.

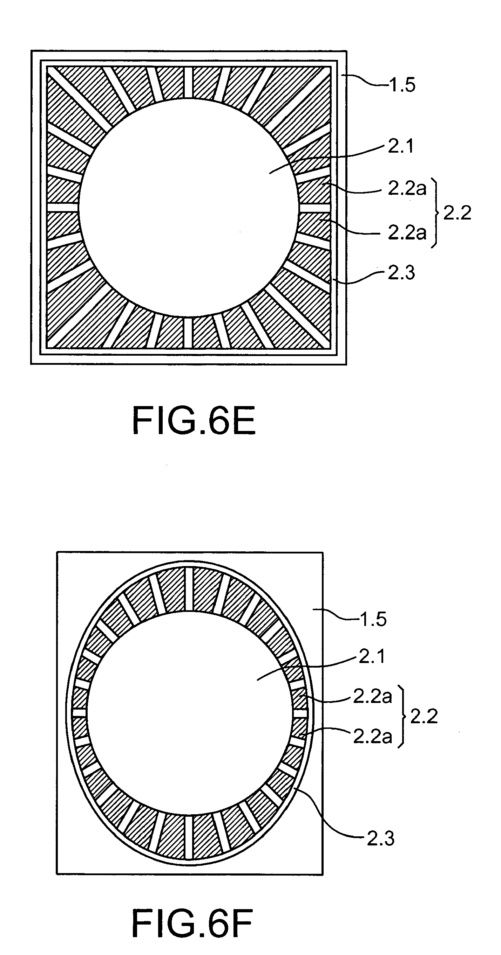

Sur la figure 6E, les portions renforcées 2.2a sont des portions de secteurs angulaires limités intérieurement par le champ optique 2.1, dans cet exemple circulaire, et extérieurement par le bord du support 1.5 recevant la zone d'ancrage 2.3 qui dans cet exemple est carré. Les secteurs angulaires ont sensiblement le même angle au sommet mais ce n'est pas une obligation.

Sur la figure 6F, dans la même optique, les portions renforcées 2.2a sont des portions de secteurs angulaires limités intérieurement par un cercle qui correspond au champ optique et extérieurement par une ellipse qui correspond au bord du support 1.5 recevant la zone d'ancrage 2.3. Dans ces deux exemples, les différentes portions renforcées 2.2a ne sont pas toutes identiques.

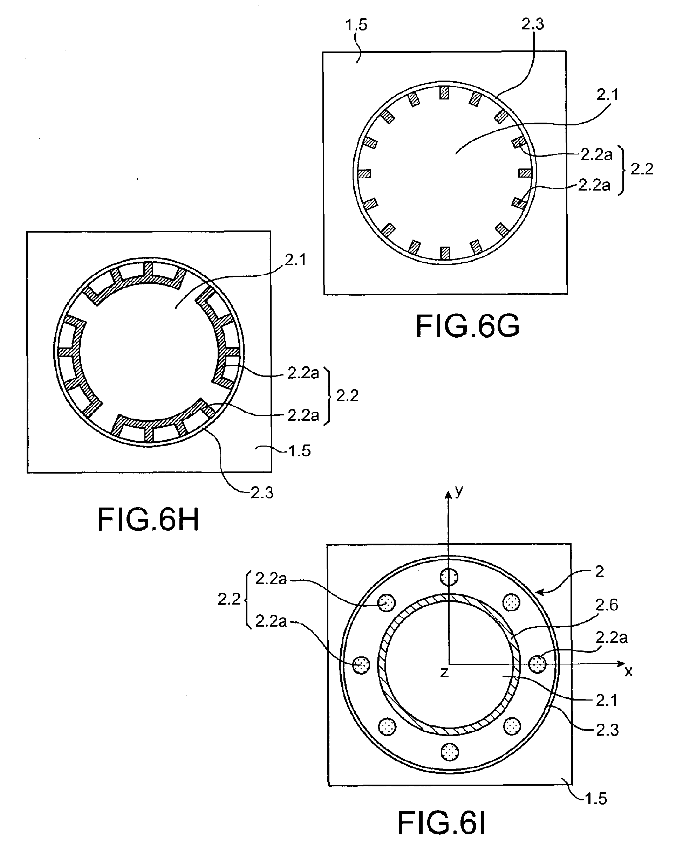

Sur la figure 6G, les portions renforcées 2.2a sont des bandes radiales qui s'arrêtent juste avant la zone d'ancrage 2.3. Elles sont sensiblement polygonales.

Sur la figure 6H, les portions renforcées 2.2a sont des portions de couronne munies de doigts radiaux. Cette configuration ressemble à celle de la figure 5E à l'exception que la zone renforcée est morcelée. Dans cet exemple les doigts radiaux se projettent vers la zone d'ancrage 2.3, mais on pourrait imaginer qu'ils se projettent vers le champ optique 2.1. Cette dernière variante n'est pas représentée dans le souci de ne pas multiplier inutilement les figures.

Il est préférable de prévoir, lorsqu'il y a une pluralité de portions renforcées 2.2a voisines et que la pluralité des portions renforcées 2.2a forme une couronne discontinue autour du champ optique 2.1, entre la zone renforcée 2.2 et le champ optique 2.1, une zone de renfort 2.6 plus rigide que le champ optique 2.1. La zone de renfort 2.6 est continue et entoure le champ optique 2.1. Les moyens d'actionnement (non représentés) ne la sollicitent pas directement. La fonction de la zone de renfort 2.6 est d'uniformiser la déformation de la membrane 2 dans le champ optique 2.1 lors de l'activation des moyens d'actionnement. La zone de renfort 2.6 assure l'invariance par rotation de la déflection de la membrane engendrée par l'actionnement des moyens d'actionnement autour de l'axe z qui est un axe de symétrie. On peut se référer à la figure 6I. Les portions renforcées 2.2a sont sensiblement circulaires.

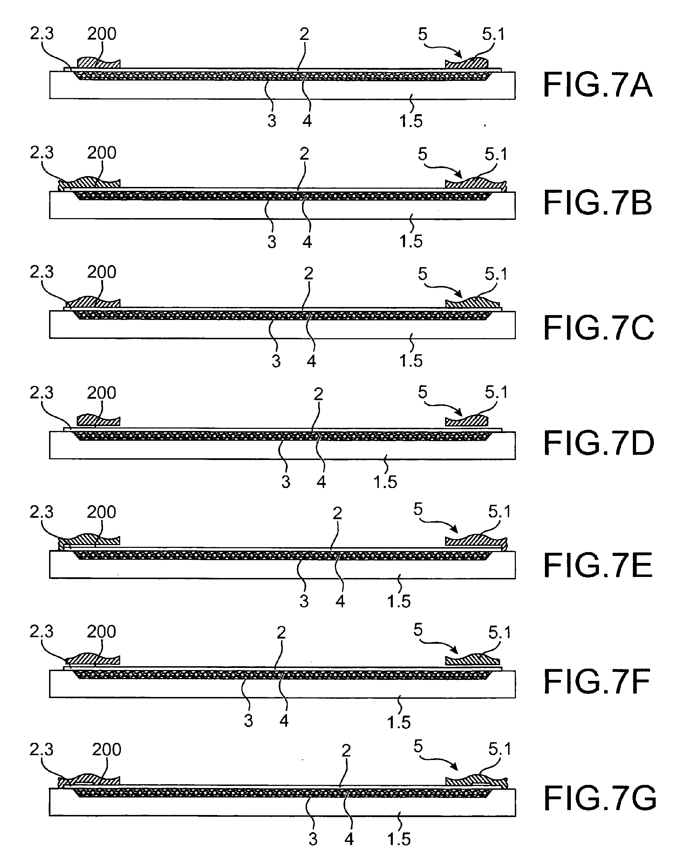

Sur les figures 7A à 7N, on a illustré différentes configurations pour les moyens d'actionnement 5.

Lors de l'actionnement, chaque actionneur 5.1 de type micro-poutre vient en contact avec la membrane au moins au niveau de la partie sollicitée 200. Mais il peut aussi être en contact total ou partiel avec la membrane au niveau de la zone d'ancrage 2.3. Il est solidaire du support 1.5 soit directement, soit indirectement, par l'intermédiaire de la membrane dans la zone d'ancrage 2.3 ou par l'intermédiaire d'une autre pièce qui est fixée au support.

Au repos, l'actionneur 5.1 peut être sans contact avec la membrane 2 que ce soit au niveau de la partie sollicitée 200 ou même de la zone d'ancrage 2.3.

En variante, toujours au repos, l'actionneur 5.1 peut être en contact avec la partie sollicitée 200 et même solidaire de la partie sollicitée 200. De la même manière, il peut être en contact partiel ou total avec la zone d'ancrage 2.3 et même être solidaire de la zone d'ancrage 2.3.

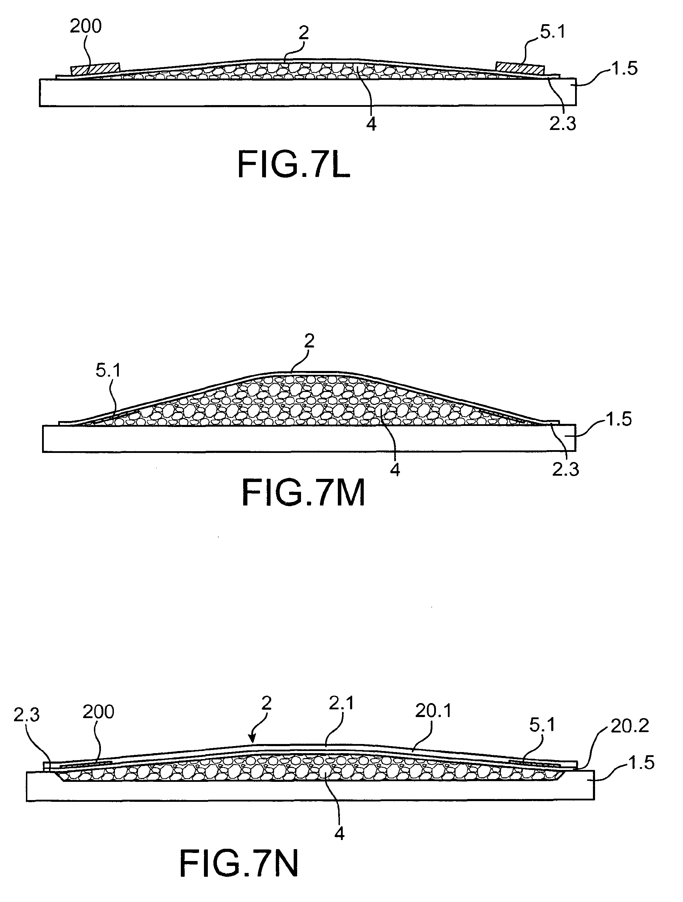

Sur la figure 7A, l'actionneur 5.1 de type micro-poutre vient, au repos, en contact avec la membrane 2 au niveau de la partie sollicitée 200 mais pas au niveau de la zone d'ancrage 2.3. Cette figure ne montre pas son contact direct ou indirect avec le support 1.5. Sur la figure 7B, l'actionneur de type micro-poutre 5.1 vient, au repos, en contact avec la membrane au niveau de la partie sollicitée 200, de la zone d'ancrage 2.3 et est solidaire du support 1.5. Sur la figure 7C, l'actionneur de type micro-poutre 5.1 vient, au repos, en contact avec la membrane au niveau de la partie sollicitée 200 et de la zone d'ancrage 2.3.

Sur la figure 7D, l'actionneur de type micro-poutre 5.1 au repos est sans contact avec la membrane 2. Elle surmonte la partie sollicitée 200. On suppose qu'elle surmonte la zone d'ancrage 2.3 et est solidaire du support 1.5 mais cette figure ne le montre pas.

Sur la figure 7E, l'actionneur de type micro-poutre 5.1 est, au repos, sans contact avec la partie sollicitée 200 et avec la zone d'ancrage 2.3 mais est solidaire directement du support 1.5. Sur la figure 7F, l'actionneur de type micro-poutre 5.1 est au repos sans contact avec la partie sollicitée 200 ni avec la zone d'ancrage 2.3. Sa fixation au support 1.5 n'est pas vue.

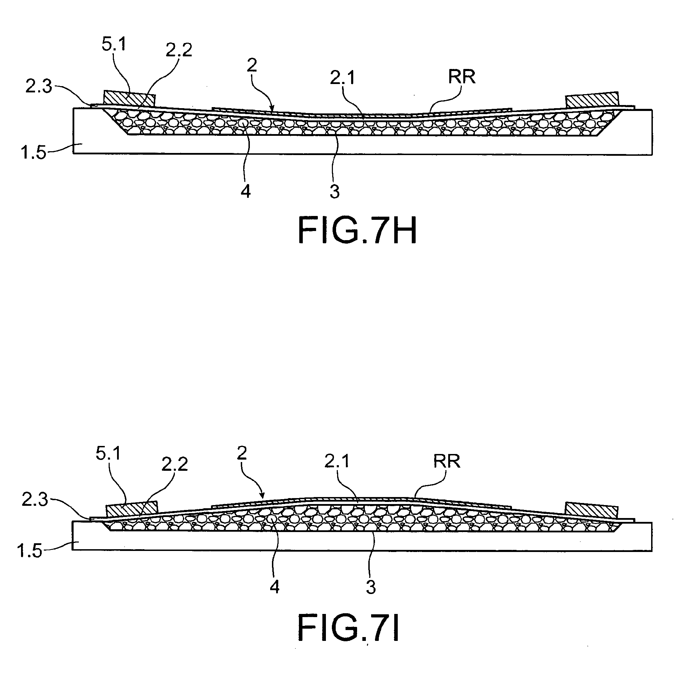

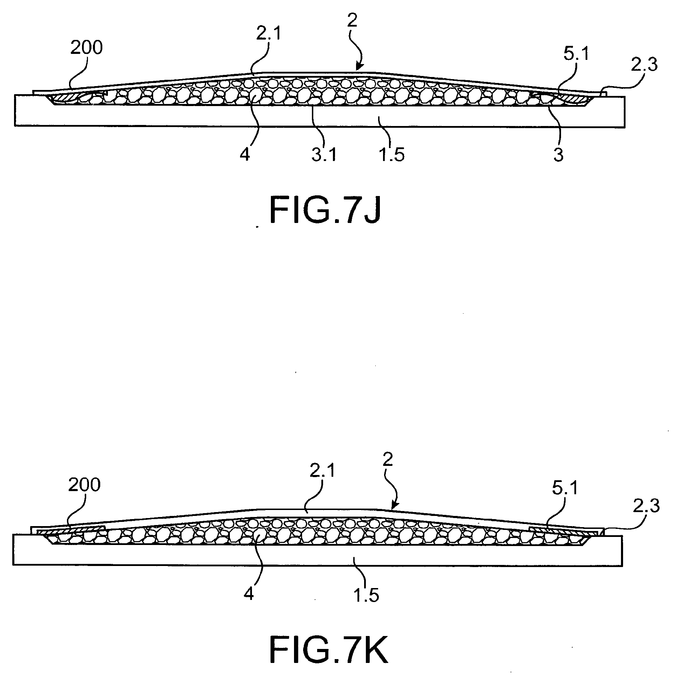

Sur la figure 7G l'actionneur de type micro-poutre 5.1 est, au repos, en contact avec la partie sollicitée 200 et la zone d'ancrage 2.3 mais n'est pas en contact avec la membrane 2 entre la partie sollicitée 200 et la zone d'ancrage 2.3. Sur les autres figures avec contact comme les figures 7A, 7B, 7C la partie sollicitée 200 était juxtaposée à la zone d'ancrage 2.3. Sur la figure 7G ce n'est pas le cas, la partie sollicitée 200 et la zone d'ancrage 2.3 sont disjointes. Sur les figures 7, on n'a pas représenté de zone renforcée. On pourrait bien sûr en prévoir une morcelée ou non.

La membrane 2 peut être plane lorsque les moyens d'actionnement 5 sont au repos comme sur les figures 7A à 7G. La cuvette 3 est nécessaire pour contenir le liquide 4. Cela correspond à un rayon de courbure infini. Il est bien sûr possible que la membrane 2 soit bombée dans un sens ou dans l'autre alors que les moyens d'actionnement 5 sont au repos. Elle possède alors un rayon de courbure fini et donc plus petit. Les figures 7H et 7I illustrent cette configuration avec respectivement une membrane 4 en dôme (concave) et une membrane 2 en cuvette (convexe). On suppose que sur les figures 7H, 7I la membrane est réfléchissante et que le dispositif optique est un miroir. On a représenté sur la face avant de la membrane 2, au moins au niveau de la zone centrale 2.1 un revêtement réfléchissant RR qui peut être par exemple une fine couche d'aluminium.

Les exemples présentés aux figures 5A à 5I, montraient des moyens d'actionnement 5 qui coopèrent avec une face avant de la membrane 2, c'est-à-dire celle qui est opposée à celle en contact avec le liquide 4. Il est bien sûr possible que les moyens d'actionnement 5 coopèrent avec la membrane 2 au niveau de sa face en contact avec le liquide 4.

Sur la figure 7J, l'actionneur de type micro-poutre 5.1 est en contact avec la membrane 2 mais aussi avec le liquide 4. Il est sur une face arrière de la membrane 2.

Lorsqu'ils sont actionnés depuis la position de repos, les actionneurs 5.1 doivent tirer la membrane 2 pour rapprocher la partie sollicitée 200 du fond 3.1 de la cuvette 3 ou plus généralement pour réduire l'épaisseur du liquide 4 au niveau du champ optique. Sur cette figure 7J, la membrane 2 est homogène, elle a une même épaisseur et une même rigidité entre le champ optique 2.1 et la partie sollicitée 200.

Sur la figure 7K, l'actionneur de type micro-poutre 5.1 est solidaire de la membrane 2 et intégré dans la membrane 2. Il est toujours en contact avec le liquide 4. L'épaisseur de la membrane 2 dans la partie sollicitée 200 par l'actionneur 5.1 est moindre que celle dans le champ optique 2.1. L'épaisseur de la partie sollicitée 200 combinée à celle de l'actionneur 5.1 est sensiblement celle du champ optique 2.1. Sur cette figure 7K, l'actionneur 5.1 vient aussi en contact avec le support 1.5, la membrane 2 surmonte l'actionneur 5.1 et vient aussi en contact sur le support 1.5.

La cuvette 3 n'est pas nécessaire comme on l'a déjà évoqué. Il est possible que le liquide 4 repose sur un support 1.5 sensiblement plan et que la membrane 2 vienne l'emprisonner. La demande de brevet EP-A-1 672 394 illustre une telle configuration de membrane emprisonnant du liquide. Cette variante est représentée sur les figures 7L et 7M, l'actionneur de type micro-poutre 5.1 est solidaire de la membrane 2, il se trouve soit sur la face avant de la membrane 2 soit sur la face arrière. Dans ces configurations, la membrane 2 est bombée lorsque les moyens d'actionnement 5 sont au repos. La membrane 2 peut être réalisée par dépôt d'un film organique, par exemple du parylène, directement sur une goutte de liquide 4, ou par ou par un procédé utilisant une couche sacrificielle. Le support 1.5 peut éventuellement être traité localement pour le rendre hydrophile ou hydrophobe selon les zones.

Sur la figure 7N, l'actionneur 5.1 de type micro-poutre est enterré dans la membrane 2, il est pris en sandwich entre deux sous-couches 20.1, 20.2 de la membrane 2. Il est intégré dans la membrane 2.

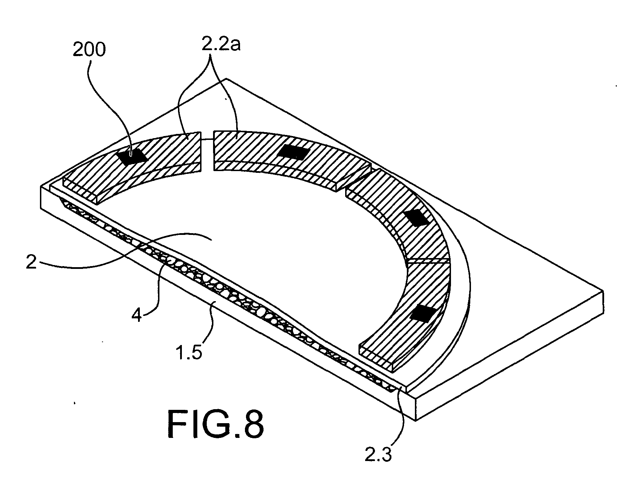

On va voir maintenant en se référant à la figure 8, la contrainte appliquée par un actionneur de type micro-poutre sur une portion renforcée 2.2a de la membrane 2. L'actionneur n'est pas représenté mais ce qui est visible c'est la partie sollicitée 200 dont la surface localisée est inférieure à celle de la portion renforcée 2.2a. La contrainte sera de préférence une force dirigée selon l'axe z. Bien sûr si la zone renforcée était en une seule partie la partie sollicitée aurait une surface inférieure à celle de la zone renforcée. Plusieurs parties sollicitées coopéreraient avec la zone renforcée. On peut même imaginer que plusieurs parties sollicitées coopèrent avec une portion renforcée.

Le dimensionnement de la membrane 2 est guidé par le comportement qu'elle aura dans le champ optique 2.1, puisque la variation de la distance focale ou de la courbure du dispositif optique dépend directement du déplacement du champ optique.

On choisit le matériau de la membrane 2 et plus particulièrement de sa couche qui occupe toute la surface de la membrane 2 pour que sa limite élastique soit suffisante pour lui garantir un fonctionnement dans le domaine élastique et une réversibilité de déformation. Elle doit revenir à sa position initiale une fois qu'elle a été déformée, par activation des moyens d'actionnement 5, lorsque ceux-ci sont revenus à une position de repos. De nombreux matériaux organiques mais aussi minéraux peuvent entrer dans la composition de la membrane 2. Ils doivent pouvoir assurer l'étanchéité pour emprisonner le liquide 4 notamment au niveau de l'ancrage. Selon les applications et les structures, ils doivent être transparents pour la longueur d'onde utilisée dans le cas d'un fonctionnement en transmission ou doivent être réfléchissants, dans le cas d'un fonctionnement en réflexion. Ils peuvent être diélectriques ou au contraire électriquement conducteurs comme on le verra ultérieurement.

Comme matériau organique, on peut choisir par exemple le polydiméthylsiloxane (PDMS), le polyméthacrylate de méthyle (PMMA) mais aussi le polyéthylène téréphtalate (PET), le polycarbonate (PC), le parylène, les résines époxydes, dont le module d'Young est compris entre quelques 100 MPa et quelques GPa. Comme matériaux minéraux, on peut choisir par exemple le silicium, l'oxyde de silicium, le nitrure de silicium, le carbure de silicium, le silicium polycristallin, le nitrure de titane, le carbone diamant. Comme matériau conducteur, on peut choisir par exemple l'oxyde d'indium et d'étain ITO qui est transparent dans le visible ou l'aluminium qui lui est réfléchissant. On verra plus loin une configuration du dispositif optique selon l'invention dans laquelle la membrane est à la fois électriquement conductrice et est soit transparente, soit réfléchissante.

Pour un bon fonctionnement du dispositif optique de l'invention, il est souhaitable que ses performances optiques soient garanties indépendamment de son orientation.

Pour ce faire, la pression induite par le poids du liquide 4 sur la membrane 2 dans le champ optique 2.1, à cause de la pesanteur, ne doit pas engendrer de déformation dégradant ses performances optiques.

Le profil de la membrane 2 influe fortement sur la forme du dioptre du champ optique. Pour un profil plan, c'est-à-dire pour une épaisseur de la membrane 2 sensiblement constante sur toute sa surface, la forme du dioptre peut être approximée par la formule suivante extraite de l'ouvrage "Théorie des plaques et des coques" de S. Timoshenko, éditeur Librairie Polytechnique, Ch Béranger, 1951. On obtient :

$$\omega(r) = \omega_0 \times \left(1 - \frac{r^2}{a^2}\right)^2$$

où $\omega(r)$ représente la déformation de la membrane (ou déformée) en fonction de la distance r de son centre (qui est aussi le centre optique de la lentille), a représente son rayon et $\omega_o$ sa flèche maximale en son centre.

L'approximation réalisée est de considérer la membrane comme ancrée à sa périphérie et soumise à une pression constante. En terme de déformée, le profil réel du dioptre demande à être déterminé plus précisément par exemple à l'aide d'un logiciel de simulation mécanique comme ANSYS par exemple. La déformée réelle se situera vraisemblablement entre la déformée approchée et une déformée sphérique.

En faisant varier l'épaisseur de la membrane et la nature de la contrainte exercée par les moyens d'actionnement, on peut faire varier la déformée et donc changer la forme du dioptre, la distance focale ou la courbure s'il s'agit d'un miroir.

Le comportement mécanique de la membrane dépend notamment de la surface de la zone renforcée 2.2 si elle existe. On s'arrange pour que la rigidité de la membrane 2 dans le champ optique 2.1, c'est à dire les paramètres E, ν et h, soit en accord avec la surface de la zone renforcée 2.2 et avec la force que développent les moyens d'actionnement 5. En effet, la pression exercée par le liquide 4 sur le champ optique 2.1 multipliée par la surface totale de la membrane en contact avec le liquide 4 est égale en première approximation, en considérant le liquide comme incompressible, à la force développée par les actionneurs de type micro-poutre 5.1.

Le comportement mécanique de la membrane dans le champ optique dépend donc de la flèche maximale de la membrane, de la force appliquée par les moyens d'actionnement 5, de leur débattement et de la surface de la zone renforcée 2.2. Plusieurs itérations peuvent être nécessaires pour adapter le comportement mécanique du champ optique 2.1 avec les grandeurs listées plus haut.

Pour arriver à un compromis intéressant, on doit choisir d'abord un ou plusieurs matériaux pour la membrane en fonction de la variation de la distance focale souhaitée et de la géométrie du champ optique, du procédé de réalisation de la membrane et des moyens d'actionnement, de l'épaisseur de la membrane, plusieurs épaisseurs pouvant être étudiées. On doit déterminer ensuite la pression maximale dans le champ optique. On optimise la surface de la zone renforcée en se plaçant dans le cas le plus favorable où la zone renforcée est continue et homogène autour du champ optique, en comparant les contraintes et débattements nécessaires pour l'actionnement afin d'obtenir la variation de distance focale recherchée compatible avec la technologie de l'actionnement retenue, en tenant compte de l'encombrement global que l'on cherche à réduire. Si on arrive sur une impasse, on recommence les itérations en changeant de matériaux pour la membrane.

Les candidats en termes de matériaux étant nombreux, l'épaisseur de la membrane peut varier de manière significative, la pression maximale requise peut donc être ajustée de façon judicieuse.

Le nombre de portions renforcées, s'il y en a plusieurs, est aussi un paramètre important pour l'élaboration du dispositif optique objet de l'invention. Chacune de ces portions renforcées est pilotée par au moins un actionneur de type micro-poutre.

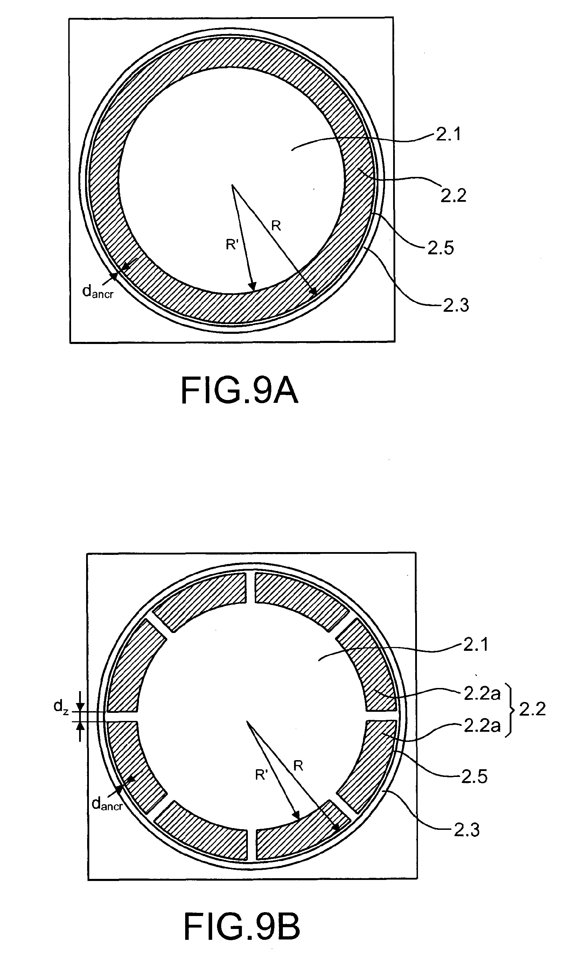

Lorsqu'il y a plusieurs portions renforcées 2.2a, deux paramètres doivent être pris en considération, il s'agit de la distance $d_z$ séparant deux portions renforcées 2.2a consécutives qui se succèdent autour de la zone centrale 2.1 d'une part et de la distance $d_{ancr}$ entre les portions renforcées 2.2a et la zone d'ancrage 2.3 au support 1.5 d'autre part. Les distances $d_z$ et $d_{ancr}$ sont illustrées sur les figures 9A, 9B.

On cherche à ce que ces distances $d_z$ et $d_{ancr}$ ne soient pas trop grandes ou ne s'appliquent pas à des parties de membrane trop souples, puisque ces parties doivent résister à la pression exercée par les moyens d'actionnement 5 sur les portions renforcées 2.2a voisines. Ces parties ne doivent pas non plus être trop rigides pour ne pas entraver le déplacement des portions renforcées 2.2a voisines. On cherche à ce qu'elles se comportent de manière aussi proche que possible des portions renforcées 2.2a.

Un tel dispositif optique selon l'invention peut être fabriqué à l'aide de technologies employées en microélectronique et dans les microsystèmes. On peut employer à la fois pour la membrane et les moyens d'actionnement des techniques de dépôts de couches minces par dépôt chimique en phase vapeur (CVD), par électrodéposition, par épitaxie, par oxydation thermique, par dépôt physique en phase gazeuse (PVD), ou encore par évaporation. On peut également utiliser les techniques de laminage de films, de dépôt à la tournette pour les matériaux organiques ou sol gel, de moulage, gaufrage à chaud (hot embossing en anglais), de nano impression (nano print en anglais), de collage de deux substrats par collage direct, par collage eutectique, par collage anodique, par collage organique.

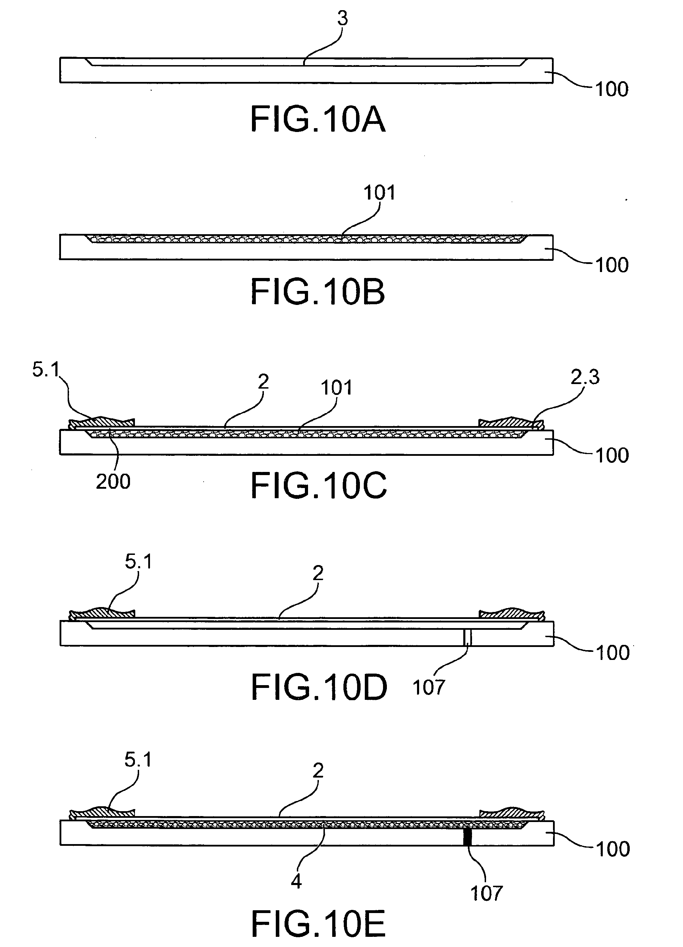

On va maintenant s'intéresser à un exemple de procédé de fabrication d'un dispositif optique à distance focale variable selon l'invention. On va utiliser une couche sacrificielle. On se reporte aux figures 10A à 10E.

On part d'un substrat 100 dans lequel une cuvette 3 a été gravée. Le substrat 100 peut être par exemple en verre. On dépose dans la cuvette 3 un matériau sacrificiel 101 (figure 10B). Le matériau sacrificiel 101 peut être organique, une résine photosensible par exemple, ou un matériau minéral tel que de l'oxyde de silicium.

On forme la membrane 2 sur le matériau sacrificiel 101, de manière à ce qu'elle déborde sur le bord de la cuvette 3 et s'y ancre (figure 10C). On peut déposer un matériau choisi dans les matériaux énumérés plus haut pour la membrane. Le dépôt peut se faire à la tournette ou par dépôt chimique en phase vapeur. On forme ensuite les actionneurs de type micro-poutre 5.1 de manière à ce que chacun surmonte une partie sollicitée 200 de la membrane 2. Ils sont aussi en contact direct ou indirect avec le substrat 100 dans une zone ne devant pas être baignée par le liquide (figure 10C). On libère ensuite la membrane 2 en éliminant le matériau sacrificiel 101. Pour cela, on peut percer au moins un trou 107, hors du champ optique, dans le substrat 100 jusqu'à atteindre le matériau sacrificiel 101. Le trou 107 est traversant et débouche dans la cuvette 3 (figure 10D). L'élimination peut être chimique ou thermique ou par plasma d'oxygène. On remplit ensuite la cuvette 3 avec le liquide 4 (figure 10E). Le remplissage peut se faire en mettant la cuvette 3 en dépression pour favoriser la pénétration du liquide 4 et éviter la formation de bulles. Enfin on rebouche le trou 107 pour que le liquide 4 ne puisse pas s'échapper (figure 10E). On peut utiliser un matériau organique. L'ordre des étapes n'est pas limitatif.

Les actionneurs de type micro-poutre 5.1 pourraient également être formés après la libération de la membrane 2 par exemple, avant le remplissage ou après. Il est également possible de les former sur la couche sacrificielle 101 et le substrat 100 avant de former la membrane 2, s'ils doivent se trouver côté liquide 4. Dans une telle configuration, il se peut que la membrane 2 surmonte totalement ou partiellement les actionneurs de type micro-poutre 5.1.

Sur les figures 10, on a représenté les actionneurs de type micro-poutre 5.1 en contact avec le substrat 100, ce n'est pas une obligation, ils auraient pu ne pas déborder de la membrane 2 et se cantonner à la zone d'ancrage 2.3.

Si l'on désire que la membrane 2 au repos soit bombée, concave ou convexe, on donne une courbure appropriée à la couche sacrificielle 101, puisqu'elle sert de moule à la membrane 2. Une autre solution pour obtenir une membrane 2 bombée serait de la faire flamber après l'avoir libérée. Le flambage peut être thermique. Les paramètres déterminants sont alors la différence de coefficient de dilatation thermique entre la membrane et le substrat et la température de dépôt de la membrane.

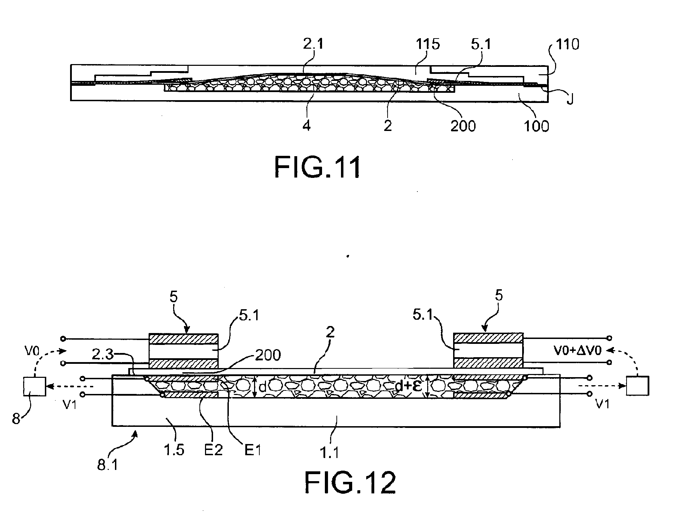

Pour protéger la membrane 2 il est possible que le dispositif optique de l'invention soit réalisé par l'assemblage de deux supports, un premier support 110 supportant les actionneurs de type micro-poutre 5.1 et le second support 100 supportant la membrane 2 et le liquide 4. Le premier support 110 fait office de protection mécanique du dispositif optique de l'invention. Un joint J de colle est utilisé pour assembler les deux supports 100, 110. Le premier support 110, est évidé dans sa partie centrale, cet évidement 115 correspondra au moins au champ optique 2.1 de la membrane 2 une fois l'assemblage des supports 100, 110 réalisé. On se réfère à la figure 11. Au niveau des parties sollicitées 200 les actionneurs de type micro-poutre peuvent être au repos en contact ou non avec la membrane. Les actionneurs peuvent être solidaires du premier support et éventuellement du second support. Une telle configuration dans laquelle on a dissocié le procédé de fabrication de la membrane de celui de fabrication des moyens d'actionnement permet de simplifier globalement le processus global. On peut ainsi espérer un meilleur rendement de fabrication.

Nous allons maintenant décrire en terme de géométrie une configuration avantageuse de la membrane d'un dispositif optique à distance focale variable selon l'invention. On suppose que le liquide 4 repose sur un fond plan. On se réfère de nouveau à la figure 9A. La membrane est circulaire, son champ optique 2.1 est circulaire et la zone renforcée 2.2 et la zone d'ancrage 2.3 sont des couronnes concentriques.

On utilise le modèle de plaque circulaire uniformément chargée, ancrée sur sa périphérie et soumise à des flèches importantes par rapport à l'épaisseur de la plaque, pour calculer les caractéristiques de la membrane, ce modèle est présenté dans l'ouvrage de S. Timoshenko cité plus haut.

La flèche maximale $\omega_0$ du champ optique est donnée par la formule :

$$\omega_0 = \frac{Pa^4}{64D} \cdot \frac{1}{1 + 0.488\frac{\omega_0^2}{h^2}} \quad \text{avec} \quad D = \frac{Eh^3}{12(1-\nu^2)}$$

où P est la pression exercée sur le champ optique, a est le rayon du champ optique, E est le module d'Young du matériau constitutif de la membrane dans le champ optique, $\nu$ est le coefficient de Poisson du matériau constitutif de la membrane dans le champ optique, h est l'épaisseur de la membrane dans le champ optique. Connaissant la flèche maximale $\omega_0$ de la zone centrale 2.1, nécessaire pour réaliser la variation de la distance focale recherchée, nous en déduisons approximativement la pression maximale P à exercer par le liquide 4 sur la zone centrale 2.1.

De façon itérative, en changeant le matériau constitutif de la zone centrale 2.1, nous pouvons faire varier la pression maximale P requise au bon fonctionnement de la lentille liquide ou du miroir. Les matériaux possibles étant nombreux pour la zone centrale 2.1, comme on l'a vu plus haut et l'épaisseur h de la zone centrale 2.1 pouvant varier de façon significative, la pression maximale P requise peut donc être ajustée de façon judicieuse, afin qu'elle soit en accord avec la surface de la zone renforcée 2.2 et avec la force P des moyens d'actionnement 5. Le comportement mécanique de la membrane dans la zone centrale 2.1 dépend de la flèche maximale de la membrane, de la force appliquée par les moyens d'actionnement 5, de leur débattement et de la surface de la zone renforcée.

Le champ optique 2.1 peut avoir un diamètre de 2,5 mm, il n'y a pas de zone de garde entre le champ optique 2.1 et la zone renforcée 2.2, mais il y une zone de garde 2.5 intermédiaire entre le champ optique 2.1 et la zone d'ancrage 2.3. La largeur de la zone d'ancrage 2.3 vaut 200 micromètres. La zone renforcée 2.2 est comprise entre un rayon intérieur R' de 1,25 mm et un rayon extérieur R variant entre 1,35 et 2,05 millimètres. La surface de la zone renforcée 2.2 varie ainsi entre 0,8 et 8,3 millimètres au carré. On suppose que la membrane est en parylène, que son épaisseur est de 1 micromètre et que la flèche maximale recherchée dans la zone centrale du champ optique est de 20 micromètres. La force totale exercée par les moyens d'actionnement selon l'axe z varie entre 0,2 et 0,4 mN. A partir de cette force, l'homme du métier n'a pas de difficulté pour remonter à l'énergie à appliquer aux actionneurs de type micro-poutre.

Le débattement de la zone renforcée 2.2 varie entre 3 micromètres pour une surface de 8,3 mm$^2$ et 7 micromètres pour une surface de 0,8 mm$^2$. La largeur $d_{ancr}$ de la zone de garde 2.5 intermédiaire peut par exemple aller jusqu'à 0,2 mm.

En reprenant toutes les approximations faites et en affinant le dimensionnement, soit expérimentalement soit par simulations mécaniques et optiques, il est probable que les forces et débattement pourront être réduits, ce qui simplifiera le dimensionnement des moyens d'actionnement et rendra le dispositif optique encore plus compact.

Un autre exemple numérique est présenté ci-dessous. On se réfère à la figure 9B. La seule différence avec la figure 9A est que maintenant, on prévoit plusieurs une zone renforcée 2.2 morcelée en plusieurs portions renforcées 2.2a qui sont en fait huit secteurs de couronne circulaire disposés autour de la zone centrale 2.1. Les différents secteurs de couronne circulaire sont espacés d'une distance $d_z$ valant quelques dizaines à quelques centaines de micromètres. La surface de la zone renforcée 2.2 s'exprime par :

$$\pi(R^2-1,25^2)-8d_z(R-1,25)$$

La distance $d_z$ ne doit pas entraver le bon fonctionnement de la variation de la distance focale.

Un compromis doit être fait entre le nombre de portions renforcées 2.2a et leurs surfaces et donc le nombre et l'encombrement des actionneurs de type micro-poutre. Le choix du nombre de portions renforcées 2.2a dépend également de la capacité des moyens d'actionnement à actionner de manière sensiblement identique chacune des portions renforcées 2.2a et de la nature de la contrainte exercée par les moyens d'actionnement.

Il se peut que des aberrations optiques apparaissent avec un dispositif optique selon l'invention. Elles sont liées au manque de parallélisme entre le bord de la membrane 2 déformée et le support 1.5 au niveau de l'ancrage. Elles peuvent notamment apparaître lorsque le dispositif optique de l'invention est réalisé à partir de deux substrats assemblés comme décrit sur la figure 11. Elles se traduisent par une flèche maximum $\omega_o$ qui n'est plus au centre du champ optique 2.1. L'axe optique du dispositif optique passe par le centre du champ optique 2.1. La qualité des images est détériorée.

Pour limiter un tel phénomène dans les lentilles liquides conventionnelles, on cherchait à optimiser l'assemblage de la membrane au support, cet assemblage était basé sur des techniques de scellement afin qu'au repos le parallélisme requis soit obtenu. Mais ensuite lorsque la lentille est en fonctionnement, on peut être amené à faire varier sa distance focale grâce à une tension d'alimentation V0 utilisée pour actionner les moyens d'actionnement 5. Si le déplacement induit par les moyens d'actionnement 5 n'est pas homogène sur toute la périphérie de la lentille liquide, le phénomène apparaît et la qualité de l'image est dégradée. L'espace d entre le fond 3.1 de la cuvette 3 et la partie sollicitée 200 de la membrane 2 n'est pas constant sur toute la périphérie de la membrane. Cette anomalie peut également se produire dans un dispositif optique selon l'invention si on ne fait rien lors de la commande des moyens d'actionnement 5. En effet, les différents actionneurs de type micro-poutre 5.1 peuvent ne pas être alimentés avec exactement la même tension V0. Une dérive de la course de certains actionneurs 5 peut se produire. La pression du liquide 4 peut ne pas être totalement uniforme sur toute la périphérie de la membrane, cela peut se produire si le dispositif est employé légèrement incliné d'un côté. En fonctionnement, le phénomène est donc difficile à maîtriser et pénalise fortement ce type de dispositif optique. Afin de lutter contre cet effet, il est possible de prévoir un contrôle de la commande des moyens d'actionnement 5.

On se réfère à la figure 12. La variation de la distance focale du dispositif optique est toujours obtenue grâce à l'action des actionneurs de type micro-poutre 5.1 lorsqu'ils sont actionnés, par application d'une tension d'alimentation V0 visant à générer une déformation mécanique des micro-poutres. On prévoit de plus des moyens d'asservissement 8 de la tension à appliquer aux moyens d'actionnement 5 en fonction de l'épaisseur d du liquide au niveau de la partie sollicitée 200. Les moyens d'asservissement 8 coopèrent avec des moyens de mesure 8.1 capacitifs de l'épaisseur du liquide, disposés en plusieurs endroits de préférence au niveau des parties sollicitées 200. Les moyens de mesure 8.1 peuvent comporter plusieurs couples d'électrodes répartis au niveau des parties sollicitées 2.2. La première électrode d'un couple E1 est située en contact avec la membrane 2 côté liquide 4 et la seconde électrode E2 se trouve au fond de la cuvette en vis-à-vis de la première électrode E1 du couple d'électrodes. En appliquant une différence de potentiel V1 sur les deux électrodes E1, E2 de chaque couple d'électrodes et en mesurant la capacité sur chaque couple d'électrodes E1, E2, on acquiert au niveau de chacun des couples d'électrodes E1, E2 la quantité de liquide 4 se trouvant entre les électrodes E1, E2 et donc l'épaisseur de liquide entre la membrane 2 et le fond 3.1 de la cuvette 3.

Sur la figure 12, on n'a fait que schématiser les moyens d'asservissement 8, de plus on ne les voit que pour deux couples d'électrodes E1, E2 et deux actionneurs 5.1 pour ne pas surcharger la figure.

Lors du fonctionnement du dispositif optique objet de l'invention, si on obtient des mesures capacitives qui diffèrent d'un endroit à un autre, par exemple d, d+ε, les moyens d'asservissement 8 reçoivent les mesures capacitives des moyens de mesure 8.1, les comparent à une valeur de référence qui correspond ici à l'espacement d mesuré par ailleurs, et commandent qu'une tension supplémentaire de correction ΔV0, en plus de la tension de référence V0, soit appliquée aux actionneurs 5.1 correspondants, aux endroits où la mesure capacitive diffère de la valeur de référence. On uniformise ainsi toutes les mesures capacitives à la valeur de référence et donc toutes les distances entre la membrane 2 et le fond 3.1 de la cuvette 3, en ajustant les tensions d'alimentation des actionneurs 5.1.

Le parallélisme nécessaire au bon fonctionnement de la lentille ou du miroir est ainsi garanti par un asservissement en déplacement. Cet asservissement ne pose pas de problème à l'homme du métier.

Lorsque l'on souhaite faire varier la distance focale du dispositif optique, on applique une tension V0 sur tous les actionneurs 5.1 des moyens d'actionnement comme représenté sur la figure 12, on mesure grâce aux moyens de mesure 8.1, l'espace d entre la membrane 2 et le fond 3.1 de la cuvette 3, les mesures sont délivrées aux moyens d'asservissement 8. Si un ou plusieurs couples d'électrodes E1, E2 détecte un décalage parasite $\varepsilon$, les moyens d'asservissement 8 commandent l'application de la tension supplémentaire de correction $\Delta V0$ à un ou plusieurs actionneurs 5 les plus proches des couples d'électrodes ayant détecté le décalage parasite $\varepsilon$. La tension d'alimentation supplémentaire de correction $\Delta V0$ appliquée à un ou plusieurs actionneurs 5.1 fait qu'ils déplacent localement la membrane 2 pour que le décalage $\varepsilon$ s'annule.

Le nombre de couples d'électrodes E1, E2 est fonction du nombre d'actionneurs 5.1 et de la surface et de la rigidité de la zone renforcée si elle existe. La position des couples d'électrodes E1, E2 est également à optimiser en fonction des parties sollicitées 200 par les actionneurs 5.1. L'objectif étant de pouvoir compenser les décalages relevées par les couples d'électrodes, il semble opportun de placer un couple d'électrodes au niveau de chaque actionneur 5.1 et donc au niveau de chaque partie sollicitée. Il serait bien sûr envisageable de placer les couples d'électrodes entre les parties sollicitées 200 mais l'asservissement serait plus difficile à réaliser.

La surface des électrodes E1, E2 est directement liée à l'épaisseur du liquide 4 au repos et plus l'épaisseur du liquide 4 est importante, plus la surface des électrodes E1, E2 est grande.

Concernant leur dimensionnement, il faut également intégrer la précision nécessaire au bon fonctionnement du dispositif optique. En effet, la capacité C du condensateur plan formé par les électrodes E1, E2 en regard s'exprime par $C = \varepsilon'S'/e$ avec S' surface des électrodes, e épaisseur du liquide et $\varepsilon'$ permittivité du liquide. La charge du condensateur Q s'exprime par $Q = CV'$ avec V' différence de potentiel appliquée aux électrodes du condensateur. Il vient $Q = \varepsilon'S'V'/e$. Pour V et $\varepsilon'$ donnés, plus S' est grande et plus e est petite plus Q est grande et donc plus les électrodes E1, E2 sont sensibles. Compte tenu des performances visées pour le dispositif optique, un décalage maximum $\varepsilon max$ entre les électrodes peut être toléré sans avoir un impact sur la qualité de l'image. La précision de mesure des couples d'électrodes doit être inférieure à $\varepsilon max$.

Pour les applications visées d'autofocus et de zoom, la distance focale du dispositif optique est à modifier avec une grande rapidité, c'est-à-dire une grande fréquence pour garantir un temps de réponse aussi court que possible. Dans une application d'appareil photo ou de caméra, pour plusieurs distances focales que prend le dispositif optique lors d'une variation de la distance focale, on utilisera le capteur d'image qui est présent pour faire un test d'image jusqu'à ce que la distance focale recherchée soit trouvée. Dans un tel fonctionnement dynamique, les mesures capacitives sont relevées plusieurs fois pour une distance focale donnée. En effet, plusieurs cycles d'acquisition des mesures capacitives, de comparaison avec une valeur de référence, de traitement de données et de commande des actionneurs, sont nécessaires pour chaque valeur de distance focale afin de garantir la qualité optique recherchée. Il faut donc que la fréquence d'acquisition des mesures capacitives soit largement supérieure à la fréquence de variation de la distance focale.

Toute la partie de traitement du signal associée à ce contrôle du déplacement par mesures capacitives est à optimiser afin de diminuer le temps de réponse de la lentille liquide tout en garantissant une uniformité de déplacement, dans la limite acceptable pour les performances optiques. Cela ne pose pas de problème à un homme du métier.

La variation de la distance focale est pilotée par la force délivrée par les moyens d'actionnement 5 mais contrôlée en déplacement grâce aux moyens d'asservissement 8. Un tel contrôle du déplacement et donc de la déformation de la membrane 2 permet d'améliorer considérablement la qualité optique du dispositif optique.

Les effets indésirables de l'orientation d'utilisation du dispositif optique de l'invention sont éliminés par deux facteurs : d'une part la limitation du volume de liquide 4, et donc la minimisation du poids de liquide 4 et d'autre part le contrôle du déplacement de la membrane 2 grâce à la mesure capacitive.

On va voir maintenant d'autres modes de réalisation du dispositif optique objet de l'invention de type lentille liquide. On se réfère aux figures 13A à 13E.

Sur la figure 13A, le support 1.5 de la membrane 2 est maintenant formé d'un cadre 1 solidaire d'une plaque 1.1 pour former la cuvette 3. La plaque 1.1 matérialise le fond de la cuvette 3, elle est transparente. Il n'y a pas de modification au niveau de la membrane 2 ni au niveau du liquide 4 par rapport à ce qui a été décrit précédemment. Les moyens d'actionnement ne sont pas représentés pour ne pas surcharger la figure.

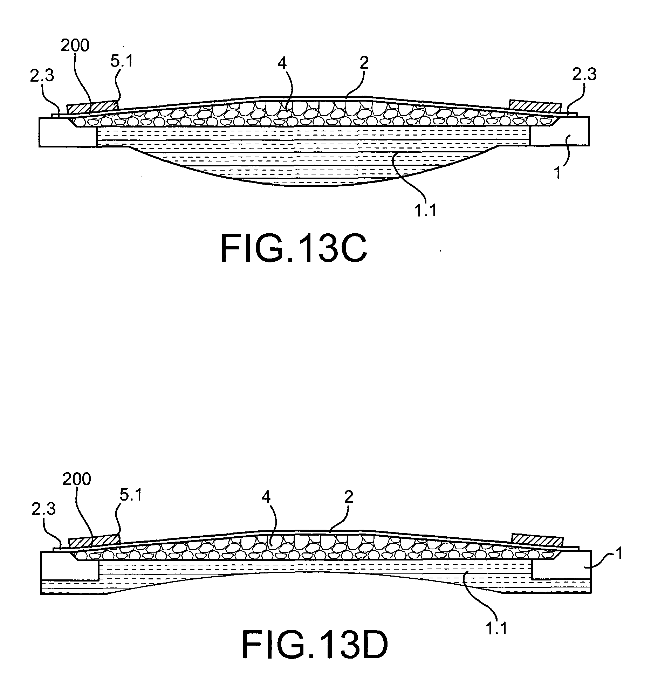

La plaque transparente 1.1 peut être d'épaisseur sensiblement constante, à faces sensiblement parallèles planes, comme sur la figure 13A. Au moins une face pourrait être structurée comme sur les figures 13B, 13C, 13D, où la face extérieure est convexe ou concave. Le choix se fait en fonction des performances optiques recherchées. Elle laisse passer un rayonnement optique qui traversera la lentille. Le cadre 1 peut être en matériau semiconducteur tel que le silicium, ce qui le rend apte à intégrer les circuits associés au traitement de la commande des moyens d'actionnement surtout si un asservissement est prévu. Les circuits ne sont pas représentés pour ne pas surcharger les figures. La plaque transparente 1.1 peut être en verre ou en matière plastique.

Sur les figures 13B, 13C, la plaque transparente 1.1 est à structure convexe et sur la figure 13D, elle est à structure concave. La structuration de la plaque 1.1 transparente peut être obtenue par usinage ou par moulage par exemple.

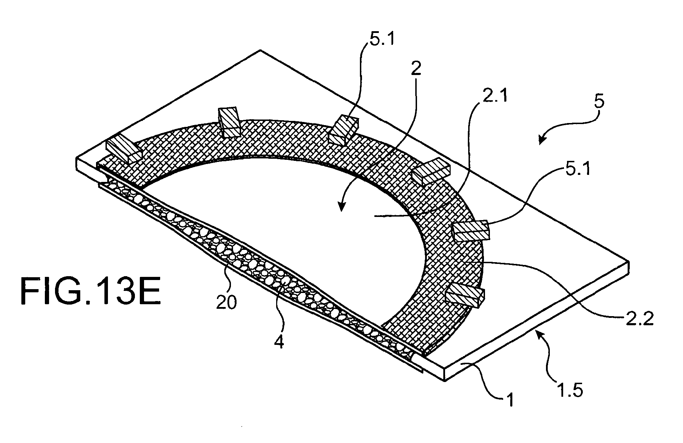

Sur la figure 13E, le support 1.5 est matérialisé par le cadre 1 et la plaque transparente 1.1 est remplacée par une seconde membrane 20. La seconde membrane comporte une couche qui s'étend sur toute la surface de la membrane. Les deux membranes 2, 20 sont ancrées sur le cadre 1, chacune sur une de ses faces principales. Elles contribuent à réaliser un logement pour le liquide 4. Cela permet d'accroître les performances optiques de la membrane. Les moyens d'actionnement 5 sont prévus sur l'une seule des membranes 2. Les trois zones de la membrane 2 munie des moyens d'actionnement 5 sont représentées. L'autre membrane 20 n'est pas actionnée, mais elle se déforme quand même lorsque les moyens d'actionnement 5 sont actionnés.

Un tel dispositif optique à distance focale variable est beaucoup plus simple que ceux existant, notamment lorsqu'il ne comporte qu'une seule membrane. En plus des avantages de simplicité, de compacité de fabrication et de coût, la fiabilité de l'ensemble est ainsi optimisée en particulier car le risque de fuites est limité.

L'échelle à laquelle est réalisée le dispositif optique objet de l'invention peut être beaucoup plus petite que celle à laquelle sont réalisées les lentilles liquides traditionnelles. Les techniques de fabrication sur tranche étant précises et répétables, les quantités de liquide peuvent donc être diminuées, de l'ordre que quelques centièmes de mm$^3$ à quelques mm$^3$. Cet avantage permet de s'affranchir de deux problèmes classiques qui sont l'effet des variations de température et de pression sur le fonctionnement du dispositif optique et sa tenue aux chocs. En effet, en minimisant la quantité de liquide, dans une lentille à volume constant, les phénomènes de dilatation de ce liquide sous l'effet de variations de température et de pression sont limités.

En outre, plus le volume de liquide est faible et plus la tenue aux chocs du dispositif optique est améliorée. En effet, la masse de liquide est moindre et sollicite moins la membrane en cas de chocs.

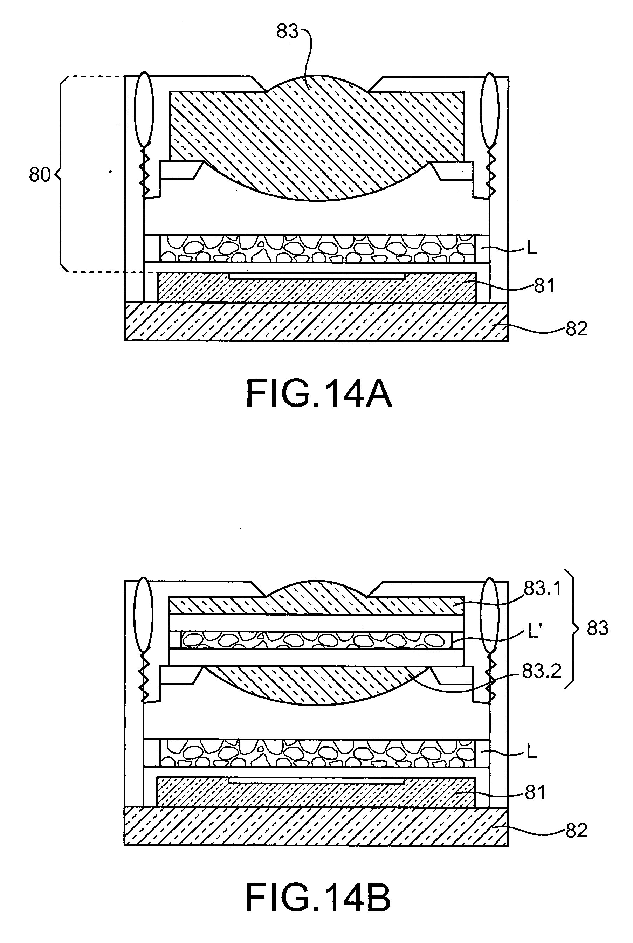

Un tel dispositif optique à distance focale variable peut être employé dans un dispositif de prise de vue notamment celui d'un appareil photo de téléphone portable. On se réfère à la figure 14A. Un tel dispositif de prise de vue comporte en cascade, un objectif 80 incluant au moins un dispositif optique à distance focale variable L selon l'invention de type lentille liquide, un capteur d'image 81 par exemple de type CCD ou CMOS porté par un substrat 82. Dans l'exemple décrit, l'objectif 80 comporte au moins une lentille 83 à distance focale fixe et une lentille liquide L selon l'invention. Par la suite cette lentille à distance focale fixe 83 sera appelée bloc optique conventionnel. La lentille liquide L se trouve entre le bloc optique conventionnel 83 et le capteur d'image 81. En variante le bloc optique conventionnel 83 peut se trouver entre la lentille liquide L et le capteur d'image 81. Le bloc optique conventionnel 83 est statique. Comme on l'a vu précédemment, de par son procédé de fabrication, la lentille liquide L peut être assimilée à un MOEMS (microsystème optoélectromécanique). La lentille liquide L à focale variable est placée à une certaine distance, qui dépend des caractéristiques de l'objectif 80, du capteur d'image 81, mais si cette distance est petite, la lentille liquide L et le capteur d'image 81 ne pourront faire qu'un seul composant en les intégrant soit en technologie AIC (abréviation anglo-saxonne de Above Integrated Circuit pour au-dessus du circuit inégré), soit en technologie WLCSP (abréviation anglo-saxonne de Wafer Level Chip Scale Package soit sur tranche à l'échelle de la puce). La distance focale de la lentille liquide L est adaptée en optimisant la pression du liquide au repos, mais aussi la courbure de la membrane au repos et l'indice de réfraction du liquide.

Si le dispositif de prise de vue inclut également la fonction zoom comme sur la figure 14B, on utilisera, un bloc optique 83 avec au moins deux lentilles à distance focale fixe 83.1 83.2 et deux lentilles liquides L et L' dont l'une se trouve entre les deux lentilles 83.1, 83.2 du bloc optique 83 et l'autre à proximité du capteur d'image 81 comme sur la figure 14B.

Bien que plusieurs modes de réalisation de la présente invention aient été décrits de façon détaillée, on comprendra que différents changements et modifications puissent être apportés sans sortir du cadre de l'invention et notamment bien d'autres procédés peuvent être utilisés pour réaliser la membrane et les moyens d'actionnement.

## Revendications

1. Dispositif optique à membrane déformable (2) comportant une zone d'ancrage (2.3) sur un support (1.5) contribuant à emprisonner un volume constant de liquide (4) en contact avec l'une de ses faces, une zone sensiblement centrale (2.1), apte à se déformer de manière réversible depuis une position de repos, des moyens d'actionnement (5) pour déplacer le liquide (4) au niveau de la zone centrale (2.1), sollicitant la membrane dans des parties (200) situées entre la zone centrale (2.1) et la zone d'ancrage (2.3), **caractérisé en ce que** les moyens d'actionnement (5) sont formés de plusieurs actionneurs (5.1) thermiques ou piézoélectriques de type micro-poutre **travaillant en flexion,** répartis à la périphérie de la membrane, ces micro-poutres ayant au moins une partie solidaire du support qui est fixe lors d'un actionnement et au moins une partie **qui est** mobile, **lors d'un actionnement, cette partie mobile étant, en position de travail,** en contact avec la membrane dans une zone située entre la zone centrale et la zone d'ancrage, et **en ce que la membrane est intégrée dans les actionneurs de type micro-poutre (5.1) ou les actionneurs de type micro-poutre (5.1) sont insérés entre deux couches (20.1, 20.2) de la membrane (2) ou les actionneurs sont intégrés dans la membrane.**

**2.** Dispositif optique selon la revendication 1, dans lequel la partie mobile est sans contact avec la partie sollicitée (200) de la membrane (2) en position de repos ou est en contact avec la partie sollicitée (200) de la membrane (2) et même éventuellement solidaire avec la partie sollicitée (200) de la membrane (2).

**3.** Dispositif optique selon l'une des revendications précédentes, dans lequel les actionneurs de type micro-poutre (5.1) sont solidaires du support (1.5) par l'intermédiaire de la membrane (2) au niveau de la zone d'ancrage (2.3) et/ou sont solidaires du support (1.5) au delà de la membrane (2).

**4.** Dispositif optique selon l'une des revendications précédentes, dans lequel la membrane (2) comporte au moins une couche continue (2.12) occupant la surface totale de la membrane (2).

**5.** Dispositif optique selon l'une des revendications précédentes, dans lequel les parties sollicitées (200) sont incluses dans une zone renforcée (2.2) de la membrane, située entre la zone centrale (2.1) et la zone d'ancrage (2.3), entourant la zone centrale (2.1), cette zone renforcée (2.2) ayant une rigidité supérieure à celle de la zone centrale (2.1) et à celle de la zone d'ancrage (2.3), la zone renforcée (2.2) s'étendant jusqu'à la zone centrale (2.1) sans empiéter sur elle ou s'arrêtant avant la zone centrale et/ou la zone renforcée s'étendant jusqu'à la zone d'ancrage (2.3) sans empiéter sur elle ou s'arrêtant avant la zone d'ancrage.

**6.** Dispositif optique selon la revendication **5,** dans lequel la zone renforcée (2.2) est formée de la couche continue (2.12) épaissie et/ou d'un empilement d'au moins la couche continue (2.12) et d'une couche additionnelle (2.20).

**7.** Dispositif optique selon l'une des revendications précédentes, dans lequel la zone d'ancrage (2.3) est formée d'au moins la couche continue (2.12) éventuellement amincie.

**8.** Dispositif optique selon l'une des revendications **5** à **7,** dans lequel une zone de garde (2.4, 2.5) intermédiaire est aménagée entre la zone d'ancrage (2.3) et la zone renforcée (2.2) et/ou entre la zone renforcée (2.2) et la zone centrale (2.1), cette zone de garde (2.4, 2.5) intermédiaire étant formée d'au moins la couche continue (2.12) éventuellement amincie.

**9.** Dispositif optique selon l'une des revendications **5** à **8,** dans lequel la zone renforcée (2.2) est en une seule partie ou morcelée en plusieurs portions (2.2a), lorsqu'elle est morcelée en plusieurs portions, les portions renforcées (2.2a) entourent chacune la zone centrale (2.1) ou bien l'ensemble des portions renforcées (2.2a) entoure la zone centrale (2.1).

**10.** Dispositif optique selon la revendication **9,** dans lequel la surface d'une partie sollicitée (200) est inférieure à celle de la zone renforcée (2.2) si elle est en une seule partie ou à celle d'une portion renforcée (2.2a) si elle est morcelée.

**11.** Dispositif optique selon l'une des revendications **9** ou **10,** dans lequel lorsque les portions renforcées (2.2a) forment une couronne discontinue autour de la zone centrale (2.1), la membrane (2) comporte en outre une zone de renfort continue (2.6) entourant la zone centrale (2.1), plus rigide que les portions renforcées (2.2a), située entre la zone centrale (2.1) et les portions renforcées (2.2a).

**12.** Dispositif optique selon l'une des revendications **5** ou **11,** dans lequel la zone renforcée (2.2) est une couronne ou une pluralité de portions de couronne munie de doigts radiaux se projetant vers la zone centrale (2.1) ou vers la zone d'ancrage (2.3).

**13.** Dispositif optique selon l'une des revendications précédentes, dans lequel le support (1.5) est sensiblement plan ou possède une cuvette (3) pour accueillir le liquide (4).

**14.** Dispositif optique selon l'une des revendications précédentes, dans lequel le support (1.5) comporte deux substrats (100, 110) assemblés l'un à l'autre, la membrane (20) étant solidaire de l'un des substrats (100), les actionneurs de type micro-poutre étant solidaires de l'autre substrat (110).

**15.** Dispositif optique selon l'une des revendications précédentes, dans lequel le support (1.7) comporte un cadre (1) et une seconde membrane (20) ancrée sur le cadre.

**16.** Dispositif optique selon l'une des revendications précédentes, dans lequel le support (1.5) comporte un cadre (1) et une plaque transparente (1.1) fixée au cadre contribuant à former une cuvette (3) pour le liquide (4), la plaque transparente ayant des faces sensiblement planes et parallèles ou une face externe à la cuvette sensiblement concave ou une face externe à la cuvette sensiblement convexe.

17. Dispositif optique selon l'une des revendications précédentes, dans lequel des moyens capacitifs (8.1) de mesure de l'épaisseur du liquide (4) sont prévus au niveau d'au moins une partie sollicitée (200).

18. Dispositif optique selon la revendication 17, dans lequel des moyens d'asservissement (8) des moyens d'actionnement (5) en fonction de l'épaisseur de liquide (4) mesurée sont prévus.

19. Dispositif optique selon l'une des revendications précédentes, dans lequel c'est une lentille liquide ou un miroir.

20. Dispositif de prise de vue **caractérisé en ce qu'**il comporte au moins un dispositif optique (L, L') selon l'une des revendications précédentes.

**Patentansprüche**

1. Optische Vorrichtung mit verformbarer Membran (2), umfassend einen Verankerungsbereich (2.3) auf einem Träger (1.5), der dazu beiträgt, ein konstantes Volumen einer Flüssigkeit (4) in Kontakt mit der einen von seinen Oberflächen einzuschließen, einen im wesentlichen zentralen Bereich (2.1), der dazu geeignet ist, sich ausgehend von einer Ruheposition in reversibler Weise zu verformen, Betätigungsmittel (5), um die Flüssigkeit (4) auf der Höhe des zentralen Bereichs (2.1) zu verlagern, wobei die Membran in Teilen (200) belastet wird, die sich zwischen dem zentralen Bereich (2.1) und dem Verankerungsbereich (2.3) befinden, **dadurch gekennzeichnet, dass** die Betätigungsmittel (5) in Form von mehreren thermischen oder piezoelektrischen Aktuatoren (5.1) vom Mikro-Balken-Typ ausgebildet sind, die unter Biegung arbeiten, und die auf dem Umfang der Membran verteilt sind, wobei die Mikro-Balken wenigstens einen Teil aufweisen, der fest mit dem Träger verbunden ist, der bei einer Betätigung fest ist, und wenigstens einen Teil aufweisen, der bei einer Betätigung beweglich ist, wobei dieser bewegliche Teil in einer Arbeitsposition in Kontakt mit der Membran in einem Bereich steht, der sich zwischen dem zentralen Bereich und dem Verankerungsbereich befindet, und dadurch, dass die Membran in die Aktuatoren vom Mikro-Balken-Typ (5.1) integriert ist, oder die Aktuatoren vom Mikro-Balken-Typ (5.1) zwischen zwei Schichten (20.1, 20.2) der Membran (2) eingefügt sind, oder die Aktuatoren in der Membran integriert sind.

2. Optische Vorrichtung nach Anspruch 1, wobei der bewegliche Teil ohne Kontakt mit dem belasteten Teil (200) der Membran (2) in der Ruheposition ist, oder in Kontakt mit dem belasteten Teil (200) der Membran (2) steht und sogar gegebenenfalls fest mit dem belasteten Teil (200) der Membran (2) verbunden ist.

3. Optische Vorrichtung nach einem der vorhergehenden Ansprüche, wobei die Aktuatoren vom Mikro-Balken-Typ (5.1) fest mit dem Träger (1.5) vermittels der Membran (2) auf der Höhe von dem Verankerungsbereich (2.3) verbunden sind oder/und fest mit dem Träger (1.5) jenseits der Membran (2) verbunden sind.

4. Optische Vorrichtung nach einem der vorhergehenden Ansprüche, wobei die Membran (2) wenigstens eine kontinuierliche Schicht (2.12) umfasst, welche die Gesamtfläche der Membran (2) besetzt.

5. Optische Vorrichtung nach einem der vorhergehenden Ansprüche, wobei die belasteten Teile (200) in einem verstärkten Bereich (2.2) der Membran eingeschlossen sind, der sich zwischen dem zentralen Bereich (2.1) und dem Verankerungsbereich (2.3) befindet und den zentralen Bereich (2.1) umgibt, wobei dieser verstärkte Bereich (2.2) eine Steifigkeit aufweist, die größer als diejenige von dem zentralen Bereich (2.1) und als diejenige von dem Verankerungsbereich (2.3) ist, wobei der verstärkte Bereich (2.2) sich bis zu dem zentralen Bereich (2.1) erstreckt, ohne in diesen einzudringen oder vor dem zentralen Bereich aufzuhören, oder/und der verstärkte Bereich sich bis zu dem Verankerungsbereich (2.3) erstreckt, ohne in diesen einzudringen oder vor dem Verankerungsbereich aufzuhören.

6. Optische Vorrichtung nach Anspruch 5, wobei der verstärkte Bereich (2.2) als kontinuierliche verdickte Schicht (2.12) oder/und als ein Stapel von wenigstens einer kontinuierlichen Schicht (2.12) und einer zusätzlichen Schicht (2.20) ausgebildet ist.

7. Optische Vorrichtung nach einem der vorhergehenden Ansprüche, wobei der Verankerungsbereich (2.3) aus wenigstens der kontinuierlichen Schicht (2.12) gebildet ist, welche gegebenenfalls verdünnt ist.

8. Optische Vorrichtung nach einem der Ansprüche 5 bis 7, wobei ein intermediärer Schutzbereich (2.4, 2.5) zwischen dem Verankerungsbereich (2.3) und dem verstärkten Bereich (2.2) oder/und zwischen dem verstärkten Bereich (2.2) und dem zentralen Bereich (2.1) vorgesehen ist, wobei dieser intermediäre Schutzbereich (2.4, 2.5) aus wenigstens der kontinuierlichen Schicht (2.12) ausgebildet ist, die gegebenenfalls verdünnt ist.

9. Optische Vorrichtung nach einem der Ansprüche 5 bis 8, wobei der verstärkte Bereich (2.2) einstückig oder in mehrere Abschnitte (2.2a) unterteilt ist, wobei dann, wenn er in mehrere Abschnitte unterteilt ist, die verstärkten Abschnitte (2.2a) jeweils den zentralen Bereich (2.1) umgeben, oder die Gesamtheit der verstärkten Abschnitte (2.2a) den zentralen Bereich (2.1) umgibt.

10. Optische Vorrichtung nach Anspruch 9, wobei die Oberfläche von einem belasteten Teil (200) kleiner als diejenige von dem verstärkten Bereich (2.2) ist, wenn dieser einstückig ist, oder als diejenige von einem verstärkten Abschnitt (2.2a), wenn dieser unterteilt ist.

11. Optische Vorrichtung nach einem der Ansprüche 9 oder 10, wobei dann, wenn die verstärkten Abschnitte (2.2a) einen diskontinuierlichen Kranz um den zentralen Bereich (2.1) bilden, die Membran (2) weiterhin einen kontinuierlichen Verstärkungsbereich (2.6) umfasst, der den zentralen Bereich (2.1) umgibt, steifer als die verstärkten Abschnitte (2.2a), und der sich zwischen dem zentralen Bereich (2.1) und den verstärkten Abschnitten (2.2a) befindet.

12. Optische Vorrichtung nach einem der Ansprüche 5 oder 11, wobei der verstärkte Bereich (2.2) ein Kranz ist oder eine Mehrzahl von Kranz-Abschnitten, ausgestattet mit radialen Fingern, die sich zu dem zentralen Bereich (2.1) oder zu dem Verankerungsbereich (2.3) hin erstrecken.

13. Optische Vorrichtung nach einem der vorhergehenden Ansprüche, wobei der Träger (1.5) im Wesentlichen eben ist oder eine Vertiefung (3) besitzt, um die Flüssigkeit (4) aufzunehmen.

14. Optische Vorrichtung nach einem der vorhergehenden Ansprüche, wobei der Träger (1.5) zwei Substrate (100, 110) umfasst, die zusammengesetzt sind, wobei die Membran (20) fest mit dem einem der Substrate (100) verbunden ist, wobei die Aktuatoren vom Mikro-Balken-Typ fest mit dem anderen Substrat (110) verbunden sind.

15. Optische Vorrichtung nach einem der vorhergehenden Ansprüche, wobei der Träger (1.7) einen Rahmen (1) und eine zweite Membran (20) umfasst, die auf dem Rahmen verankert ist.

16. Optische Vorrichtung nach einem der vorhergehenden Ansprüche, wobei der Träger (1.5) einen Rahmen (1) und eine transparente Platte (1.1) umfasst, die an dem Rahmen befestigt ist, was dazu beiträgt, eine Vertiefung (3) für die Flüssigkeit (4) zu bilden, wobei die transparente Platte im Wesentlichen ebene und parallele Oberflächen umfasst, oder eine im Wesentlichen konkave Oberfläche außerhalb der Vertiefung umfasst, oder eine im Wesentlichen konvexe Oberfläche außerhalb der Vertiefung umfasst.

17. Optische Vorrichtung nach einem der vorhergehenden Ansprüche, wobei kapazitive Mittel (8.1) zur Messung der Tiefe der Flüssigkeit (4) auf Höhe von wenigstens einem belasteten Teil (200) vorgesehen sind.

18. Optische Vorrichtung nach Anspruch 17, wobei Mittel (8) zum Steuern/Regeln der Betätigungsmittel (5) in Abhängigkeit von der gemessenen Tiefe der Flüssigkeit (4) vorgesehen sind.

19. Optische Vorrichtung nach einem der vorhergehenden Ansprüche, wobei diese eine Flüssiglinse oder ein Spiegel ist.

20. Bildaufnahmeeinrichtung, **dadurch gekennzeichnet, dass** sie wenigstens eine optische Vorrichtung (L, L') nach einem der vorhergehenden Ansprüche umfasst.

**Claims**

1. Optical device with deformable membrane (2) comprising an anchoring area (2.3) on a support (1.5) helping to contain a constant volume of liquid (4) in contact with one of its faces, a substantially central area (2.1), able to be deformed reversibly from a rest position, actuation means (5) for displacing the liquid (4) in the central area (2.1), stressing the membrane in parts (200) situated between the central area (2.1) and the anchoring area (2.3), **characterised in that** the actuation means (5) comprise several thermal or piezoelectric actuators of micro-beam type (5.1) working in flexion, distributed at the periphery of the membrane, said micro-beams having at least one part joined to the support that is fixed during an actuation and at least one moving part during an actuation, this moving part being, in a working position, into contact with the membrane in an area situated between the central area and the anchoring area, and **in that** the membrane is integrated in the actuators of micro-beam type (5.1) or the actuators of micro-beam type (5.1) are inserted between two layers (20.1, 20.2) of the membrane (2) or the actuators are integrated in the membrane.

2. Optical device according to claim 1, wherein the moving part is without contact with the stressed part (200) of the membrane (2) at rest position or is in contact with the stressed part (200) of the membrane (2) and even if necessary joined to the stressed part (200) of the membrane (2).

3. Optical device according to one of the preceding claims, wherein the micro-beam type actuators (5.1) are joined to the support (1.5) via the membrane (2) at the anchoring area (2.3) and/or are joined to the support (1.5) beyond the membrane (2).

4. Optical device according to one of the preceding claims, wherein the membrane (2) comprises at least one continuous layer (2.12) occupying the whole surface of the membrane (2).

5. Optical device according to one of the preceding claims, wherein the stressed parts (200) are included in a reinforced area (2.2) of the membrane, situated between the central area (2.1) and the anchoring area (2.3), surrounding the central area (2.1), said reinforced area (2.2) having a rigidity greater than that of the central area (2.1) and that of the anchoring area (2.3), the reinforced area (2.2) extending up to the central area (2.1) without encroaching upon it or stopping before the central area and/or the reinforced area (2.2) extending up to the anchoring area (2.3) without encroaching upon it or stopping before the anchoring area.

6. Optical device according to claim 5, wherein the reinforced area (2.2) comprises the thickened continuous layer (2.12) and/or a stack of at least the continuous layer (2.12) and an additional layer (2.20).

7. Optical device according to one of the preceding claims, wherein the anchoring area (2.3) comprises at least the continuous layer (2.12), if necessary thinned.

8. Optical device according to one of claims 5 to 7, wherein an intermediate guard area (2.4, 2.5) is laid out between the anchoring area (2.3) and the reinforced area (2.2) and/or between the reinforced area (2.2) and the central area (2.1), said intermediate guard area (2.4, 2.5) comprising at least the continuous layer (2.12), if necessary thinned.

9. Optical device according to one of claims 5 to 8, wherein the reinforced area (2.2) comprises a single part or is split up into several portions (2.2a), when it is split up into several portions, the reinforced portions (2.2a) each surround the central area (2.1) or instead all of the reinforced portions (2.2a) surround the central area (2.1).

10. Optical device according to claim 9, wherein the surface area of a stressed part (200) is less than that of the reinforced area (2.2) if it is made of a single part or that of a reinforced portion (2.2a) if it is split up.

11. Optical device according to one of claims 9 or 10, wherein when the reinforced portions (2.2a) form a discontinuous crown around the central area (2.1), the membrane (2) further comprises a continuous reinforcement area (2.6) surrounding the central area (2.1), more rigid than the reinforced portions (2.2a), situated between the central area (2.1) and the reinforced portions (2.2a).

12. Optical device according to one of claims 5 or 11, wherein the reinforced area (2.2) is a crown or a plurality of portions of crown provided with radial fingers projecting towards the central area (2.1) or towards the anchoring area (2.3).

13. Optical device according to one of preceding claims, wherein the support (1.5) is substantially flat or has a dish (3) to accommodate the liquid (4).

14. Optical device according to one of preceding claims, wherein the support (1.5) comprises two substrates (100, 110) assembled together, the membrane (20) being joined to one of the substrates (100), the micro-beam type actuators being joined to the other substrate (110).

**15.** Optical device according to one of preceding claims, wherein the support (1.7) comprises a frame (1) and a second membrane (20) anchored on the frame.

**16.** Optical device according to one of the preceding claims, wherein the support (1.5) comprises a frame (1) and a transparent plate (1.1) fixed to the frame helping to form a dish (3) for the liquid (4), the transparent plate having substantially flat and parallel faces or one face external to the dish substantially concave or one face external to the dish substantially convex.

**17.** Optical device according to one of the preceding claims, wherein capacitive means (8.1) for measuring the thickness of the liquid (4) are provided in at least one stressed part (200).

**18.** Optical device according to claim 17, wherein means (8) for automatically controlling the actuation means (5) as a function of the measured thickness of liquid (4) are provided for.

**19.** Optical device according to one of the preceding claims, wherein it is a liquid lens or a mirror.

**20.** Camera device **characterised in that** it comprises at least one optical device (L, L') according to one of the preceding claims.

FIG.1A

FIG.1B

FIG.1C

FIG.1D

FIG.1E

FIG.2A

FIG.2B

2.3   2.5        2.2                    2.1

FIG.3.1        2.20                    2.12

FIG.3.2        2.20                    2.12

FIG.3.3        2.20            2.4     2.12
                                              2.11

FIG.3.4              2.20              2.12

FIG.3.5                                2.12

FIG.3.6                                2.12

FIG.3.7        2.20                    2.12
                                              2.11

FIG.3.8        2.20                    2.12
                                              2.11

EP 2 171 503 B1

2.3   2.5      2.2              2.1

FIG.3.9      2.20        2.12
                                    2.11

FIG.3.10                  2.12

FIG.3.11     2.20        2.12

FIG.3.12                  2.12
                2.20

FIG.3.13                  2.12
                                    2.11

FIG.3.14                  2.12
                2.20                2.11

FIG.3.15     2.20        2.12
                                    2.13

26

FIG.4A

FIG.4B

FIG.4C

FIG.5A

FIG.5B

FIG.5C

**FIG.5D**

**FIG.5E**

FIG.6A

FIG.6B

FIG.6C

FIG.6D

FIG.6E

FIG.6F

1.5            2.3

2.1

2.2a ⎫
    ⎬ 2.2
2.2a ⎭

## FIG.6G

2.1

2.2a ⎫
    ⎬ 2.2
2.2a ⎭

1.5

2.3

## FIG.6H

y

2.2a ⎧
2.2 ⎨
2.2a ⎩

2

2.6

2.2a

z     x

2.1

2.3

1.5

## FIG.6I

FIG.7A

FIG.7B

FIG.7C

FIG.7D

FIG.7E

FIG.7F

FIG.7G

**FIG.7H**

**FIG.7I**

FIG.7J

FIG.7K

FIG.7L

FIG.7M

FIG.7N

FIG.8

FIG.9A

FIG.9B

FIG.10A

FIG.10B

FIG.10C

FIG.10D

FIG.10E

FIG.11

FIG.12

EP 2 171 503 B1

FIG.13A

FIG.13B

41

FIG.13C

FIG.13D

FIG.13E

FIG.14A

FIG.14B

102
201
203
103
106a
106b
104
105
1000

FIG.15A

104b
103
104a
105
106b
1000

FIG.15B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5917657 B
- US 6344930 B
- JP 10144975 A
- JP 8114703 A
- US 5138494 A
- WO 2003102636 A
- JP 2002243918 A
- JP 60220301 A
- WO 2007017089 A
- JP 10144975 B
- US 4226507 A
- EP 1672394 A

**Littérature non-brevet citée dans la description**

- The constituent équations of piezoelectric multilayer bending actuators in closed analytical form and experimental results. *Sensors and actuators A 130-131,* 2006, 91-98
- Thermally actuated microprobes for new wafer probe card. *IEEE Journal of microelectromechanical systems,* Mars 1999, vol. 8 (1